# EUROPEAN PATENT APPLICATION

(11) **EP 4 528 900 A1**
(43) Date of publication of application: **26.03.2025**
(21) Application number: 24821241.7
(22) Date of filing: 28.06.2024
(51) Int. Cl.: H01M 50/40, H01M 50/44

(54) **COMPOSITE SEPARATOR AND PREPARATION METHOD THEREFOR, AND BATTERY**

(30) Priority: 14.08.2023 CN 202311020544; 04.12.2023 CN 202311641769
(71) Applicant: Shanghai Energy New Materials Technology Co., Ltd., Shanghai 201399 (CN); Jiangsu Energy New Material Technology Co., Ltd., Changzhou, Jiangsu 213200 (CN)
(72) Inventor: SU, Yibing, Shanghai 201399 (CN); SU, Xiaoming, Shanghai 201399 (CN); YU, Shaobo, Shanghai 201399 (CN); CUI, Ruyu, Shanghai 201399 (CN); CAI, Yuhong, Shanghai 201399 (CN); ZHUANG, Zhi, Shanghai 201399 (CN); CHENG, Yue, Shanghai 201399 (CN)
(74) Representative: Ipside
(86) International application number: PCT/CN2024/102206
(87) International publication number: WO 2025/011357

(57) **Abstract**

The present application proposes a composite separator, including: a base membrane, a first nanofiber layer, and a ceramic powder. The first nanofiber layer is positioned on a first side of the base membrane. The ceramic powder forms a first ceramic coating positioned between the first nanofiber layer and the base membrane, or, the ceramic powder is added to the first nanofiber layer. In addition, the present application further proposes a method for preparing the composite separator, and a battery.

## Description

### TECHNICAL FIELD

The present application relates to the technical field of battery separators, and particularly to a composite separator and a method for preparing the same, and a battery.

### BACKGROUND

As one of the important cores in the development of the field of new energy technology, a lithium-ion battery has the advantages of high capacity, high operating voltage, high energy density, long cycle life, good safety performance, no memory effect, and the like and thus, has been widely used in an electronic apparatus, an electric vehicle, space technology, a defense industry and other industries. With the increasing sophistication of electronic products, the demand for the high energy density and the high capacity of the battery is increasing day by day. To accommodate more electrode materials in a small volume, a separator needs to create more space for electrode materials. However, the separator needs to be lightweight and thin, thus creating higher requirements for the safety performance thereof.

The lithium-ion battery mainly includes positive and negative electrodes, a separator and an electrolyte. As one of important components, the separator plays an important role in the performance of a battery. The main role of the separator is to isolate positive and negative electrodes, so that electrons in the battery cannot pass through freely, while also allowing the ions in the electrolyte to pass freely between the positive and negative electrodes to form a charge and discharge circuit. The ions shuttle to the positive and negative electrodes to complete the charge and discharge cycle. The safety performance of the separator is directly related to the overall performance of the battery. Repeated charging and discharging cycles of the battery generate a lot of heat. The separator withstands a high temperature without breaking the separator, and resists the puncture of a lithium dendrite, to prevent the battery from being short circuit. At present, for a conventional lithium battery separator, a ceramic material is coated on a polyolefin substrate to improve the integrated thermal and mechanical performance of the separator. However, the infiltration performance and mechanical performance of the electrolyte need to be further improved.

In summary, it is necessary to provide a separator with high support strength and puncture strength to enhance the safety in use and service life of lithium-ion batteries.

### SUMMARY

An objective of the present application is to provide a composite separator of a battery that is good in any one or more of electrolyte infiltration performance, mechanical performance, thermal stability, and cycle stability of the battery.

Accordingly, the present application proposes a composite separator, including: a base membrane, a first nanofiber layer, and a ceramic powder. The first nanofiber layer is positioned on a first side of the base membrane. The ceramic powder forms a first ceramic coating, positioned between the first nanofiber layer and the base membrane, or the ceramic powder is added to the first nanofiber layer.

In the present application, nanofibers are interlaced and interspersed to form a mesh-shaped structure, so that lithium ions are uniformly deposited on the mesh-shaped structure, thereby avoiding formation of a lithium dendrite due to too high concentration of the lithium ions deposited in a certain region. Further, a force applied to a single point on the mesh-shaped structure can be uniformly diffused from the level of a point to the level of a surface, so as to enhance the structural strength of the separator and the strength of a puncture, and thus effectively prevent the lithium dendrite from piercing the separator. In addition, because the mesh-shaped structure formed by the nanofibers contains a nearly two-dimensional planar shape, a thickness of the nanofiber layer can be controlled, so that when the separator is applied to a lithium-ion battery, the capacity of the lithium-ion battery can be enlarged or a volume of the lithium-ion battery can be reduced without affecting the capacity of the lithium-ion battery. The separator can be assembled in a more compact or more precise apparatus or instrument.

In the present application, further provided is a method for preparing the above composite separator, including the following steps: (S1): coating a slurry containing nanofibers on the first side of the base membrane; and (S2): drying the slurry containing the nanofibers to form the first nanofiber layer; where the method, prior to step (S1), further includes: (S01): coating a slurry containing the ceramic powder on the first side of the base membrane; and (S02): drying the slurry containing the ceramic powder to form the first ceramic coating; or, the method, prior to step (S1), further includes: (S0): adding the ceramic powder to the slurry.

In the present application, further provided is a battery, including: a separator. The separator includes the above composite separator.

### BRIEF DESCRIPTION OF THE DRAWINGS

FIG. 1 is a schematic diagram presenting a composite separator of an embodiment of the present application;
FIG. 2 is a schematic diagram presenting a composite separator of an embodiment of the present application;
FIG. 3 is a schematic diagram presenting a composite separator of an embodiment of the present application;
FIG. 4 is a schematic diagram presenting a composite separator of an embodiment of the present application;
FIG. 5 is a scanning electron photomicrograph presenting a nanofiber layer of an embodiment of the present application; and
FIG. 6 is a scanning electron photomicrograph presenting a nanofiber layer of an embodiment of the present application.

### DETAILED DESCRIPTION OF EMBODIMENTS

Specific embodiments of the present application are described in detail below in conjunction with the accompanying drawings. It should be understood that the specific embodiments described herein are intended only to illustrate and explain the present application and are not intended to limit the present application.

Neither the endpoints of ranges disclosed herein nor any of values are limited to the precise ranges or values. These ranges or the values are understood to include values close to the ranges or the values. For numerical ranges, the endpoint values of respective ranges can be combined with each other; the endpoint values of the respective ranges and the individual point values can be combined with each other, and the individual point values can be combined with each other to obtain one or more new numerical ranges. These numerical ranges are considered to be specifically disclosed herein.

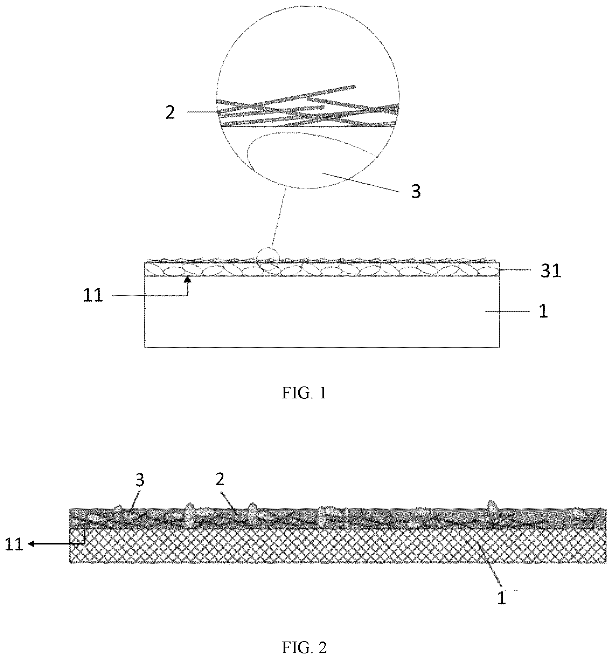

Referring to FIGS. 1 and 2, there is presented a composite separator proposed in first and second embodiments, respectively, including: a base membrane (1), and a first nanofiber layer (2). In order that the separator has better thermal stability so that the separator can withstand the heat generated in the battery charging and discharging process, in order that the separator has better electrochemical strength to avoid the organic solvent contained in the electrolyte from corroding the separator, which leads to the positive and negative electrodes of the battery being in contact with each other, in order that the separator has a better insulating property to ensure the mechanical isolation of the separator on the positive and negative electrodes, or in order that the separator provides a certain tensile in the state of a thin sheet, the base membrane (1) may contain one or more of polyethylene and polypropylene. To improve the performance of the battery, the base membrane (1) may have a thickness of 3 µm-10 µm, such as 3 µm, 4 µm, 5 µm, 6 µm, 7 µm, 8 µm, 9 µm, or 10 µm. In these embodiments, the composite separator further includes a ceramic powder (3). In the embodiment presented in FIG. 1, the ceramic powder (3) forms a first ceramic coating (31) positioned between the first nanofiber layer (2) and the base membrane (1). In the embodiment presented in FIG. 2, the ceramic powder (3) is added to the first nanofiber layer (2).

Further discussion is provided below with respect to the embodiment presented in FIG. 1:
The first nanofiber layer (2) may uniformly deposit lithium ions to avoid the growth of a lithium dendrite, and may enhance the puncture strength of the separator to avoid the lithium dendrite from piercing the separator. Specifically, the first nanofiber layer (2) may protect the base membrane (1), improve the puncture strength of the separator, and avoid the lithium dendrite from piercing the separator. To avoid affecting the absorption rate or retention rate of the electrolyte by the separator, and to avoid compressing an accommodating space of the battery to affect the capacity of the battery, the first nanofiber layer (2) needs to be kept light and thin and have a uniform porosity under the condition of sufficient support strength. The first nanofiber layer (2) may have a thickness of 1 µm-2 µm, such as 1 µm, 1.1 µm, 1.2 µm, 1.3 µm, 1.4 µm, 1.5 µm, 1.6 µm, 1.7 µm, 1.8 µm, 1.9 µm, or 2 µm.

The first nanofiber layer (2) at least includes a nanofiber. Because nanofibers are bendable and flexible, a network structure with a large number of pores may be formed when the nanofibers are arranged and interlaced with each other. In other words, the nanofibers are interactively stacked and connected to form a two-dimensional network structure. Specifically, when lithium ions are deposited on a fluid collector, a spherical protrusion is formed and a high electric field is provided, causing the lithium ions to be further deposited to form a lithium dendrite. Moreover, the network structure formed by the nanofibers allows a metal lithium to be uniformly deposited and inhibits the growth of the lithium dendrite. In addition, the large surface area and porous structure of the network structure can significantly reduce a local electric field of the separator, thereby being able to accommodate more lithium, reducing a volume change of the separator in a charge/discharge cycling process, and being able to maintain a higher battery capacity after multiple charge/discharge cycles. The nanofibers may include one or more of barium dititanate nanowires, hydroxyapatite nanowires, calcium phosphate nanowires, calcium silicate nanowires, and carboxymethyl cellulose nanowires. To provide air permeability and avoid too high internal resistance, the surface density of the first nanofiber layer (2) needs to be controlled, so that the overall separator is kept light and thin while having sufficient structural stability, heat resistance stability, and needling strength, so as to reduce the volume of the battery or expand the capacity of the battery. The first nanofiber layer (2) may have a surface density of 0.1 g/m²-3 g/m², such as 0.1 g/m²,0.2 g/m²,0.3 g/m²,0.4 g/m²,0.5 g/m²,0.6 g/m²,0.7 g/m²,0.8 g/m²,0.9 g/m²,1 g/m²,1.1 g/m²,1.2 g/m²,1.3 g/m²,1.4 g/m²,1.5 g/m²,1.6 g/m²,1.7 g/m²,1.8 g/m²,1.9 g/m²,2 g/m², 2.1 g/m², 2.2 g/m², 2.3 g/m², 2.4 g/m², 2.5 g/m², 2.6 g/m², 2.7 g/m², 2.8 g/m², 2.9 g/m², or 3 g/m². By adjusting the length-to-diameter ratio of the nanofibers, the probability that the nanofibers are interlaced and interspersed can be controlled. When the length-to-diameter ratio is too large, the nanofibers are prone to be intertwined, resulting in the inability to effectively control the uniformity of the coating of the nanofibers, and resulting in the uneven density of the formed mesh-shaped structure. When the surface of the separator is uneven, a void will be generated between the separator and the electrodes, so as to allow the lithium dendrite to grow therein, resulting in the battery separator having a risk of being punctured by the lithium dendrite. When the length-to-diameter ratio is too small, the nanofibers cannot be effectively interlaced and interspersed, resulting in the formation of the loose mesh-shaped structure, which is unable to effectively resist heat energy and provide sufficient strength for puncture. The nanofibers are extended in a height direction when being interlaced. The fibers are vertically crossed to show a three-dimensional interacting structure rather than a two-dimensional planar arrangement, resulting in an increase in an uneven thickness of the separator and the shrinkage of the capacity of the battery. Therefore, to form a two-dimensional mesh-shaped structure between the extremely thin thicknesses of the nanofibers, the length-to-diameter ratio of the nanofibers may be in a range of 20-100, such as 20, 40, 60, 80, or 100. To reduce the surface energy to avoid the agglomeration of the nanofiber slurry, the particle size and the specific surface area of the nanofibers may be regulated. The particle size D50 of the nanofibers may be in a range of 0.5 µm-6.5 µm, such as 0.5 µm, 1 µm, 1.5 µm, 2 µm, 2.5 µm, 3 µm, 3.5 µm, 4 µm, 4.5 µm, 5 µm, 5.5 µm, 6 µm, or 6.5 µm. The specific surface area can be in a range of 2 m²/g-20 m²/g, such as 2 m²/g, 3 m²/g, 4 m²/g, 5 m²/g, 6 m²/g, 7 m²/g, 8 m²/g, 9 m²/g, 10 m²/g, 11 m²/g, 12 m²/g, 13 m²/g, 14 m²/g, 15 m²/g, 16 m²/g, 17 m²/g, 18 m²/g, 19 m²/g, or 20 m²/g. The first nanofiber layer (2) may further contain a binder in addition to the nanofibers. The binder may include one or more of polymethacrylate, polyacrylamide, styrenate, phenylacrylate, polyvinylidene fluoride and polyvinyl alcohol.

The first nanofiber layer (2) may be formed by drying a nanofiber slurry. To control the fluidity or viscosity of the nanofiber slurry, the nanofiber slurry may include nanofibers, a binder and a coating material. The coating material may include one or more of a dispersant, a thickener, a solvent, and a wetting agent. The solvent is added to the nanofiber slurry so that the nanofiber slurry has a good coating property. Therefore, after the solvent evaporates, the obtained first nanofiber layer (2) has a uniform thickness and a dense structure. The solvent may include one or more of ethanol, acetone, NMP, isopropyl alcohol, and deionized water. The dispersant may include one or more of ammonium polyacrylate, amine polyacrylate, a styrene maleic anhydride polymer, and phosphoric acid ester. The thickener may include one or more of sodium carboxymethylcellulose, flake bentonite, and cohesive polyurethane. The wetting agent may include one or more of succinic acid, acetylenediol, and organosiloxane. To allow the first nanofiber layer (2) to have good structural stability and a heat resistance, the nanofibers may have a content of 5 wt%-10 wt% by a total weight of the nanofiber slurry, such as 5 wt%, 6 wt%, 7 wt%, 8 wt%, 9 wt%, or 10 wt%. The binder may have a content of 1 wt%-2 wt% by total weight of the nanofibers, such as 1 wt%, 1.1 wt%, 1.2 wt%, 1.3 wt%, 1.4 wt%, 1.5 wt%, 1.6 wt%, 1.7 wt%, 1.8 wt%, 1.9 wt%, or 2 wt%. Specifically, the nanofiber slurry may include the nanofibers of 5 wt%-10 wt% based on the nanofiber slurry, the dispersant of 0.5 wt%-1.5 wt% based on the nanofibers, the thickener of 1.2wt%-1.8wt% based on the nanofibers, the binder of 1 wt%-2 wt% based on the nanofibers, the wetting agent of 0.01 wt%-0.5 wt% based on the nanofibers, and the remaining is a solvent.

The first ceramic coating (31) may support the base membrane (1) and blocks heat energy from directly contacting the base membrane (1), thereby avoiding the base membrane (1) from developing pores in a process of charging and discharging the battery, or under the influence of a force. The ceramic powder (3) in the first ceramic coating (31) may include one or more of inorganics of alumina, boehmite, barium titanate, silicon dioxide, and magnesium hydroxide, has a particle size D50 of 0.3 µm-1 µm and a specific surface area of 2 m²/g-12 m²/g. To provide sufficient support for the base membrane (1), the surface density of the first ceramic coating (31) covering on the base membrane (1) may not be too low. The first ceramic coating (31) may have a surface density of 0.5 g/m²-3 g/m², such as 0.5 g/m², 0.6 g/m², 0.7 g/m², 0.8 g/m², 0.9 g/m², 1 g/m², 1.1 g/m², 1.2 g/m², 1.3 g/m², 1.4 g/m², 1.5 g/m², 1.6 g/m², 1.7 g/m², 1.8 g/m², 1.9 g/m², 2 g/m², 2.1 g/m², 2.2 g/m², 2.3 g/m², 2.4g/m², 2.5 g/m², 2.6 g/m², 2.7 g/m², 2.8 g/m², 2.9 g/m², or 3 g/m². To allow the first ceramic coating (31) to effectively support the base membrane (1) and insulate thermally the base membrane (1), and to allow the separator to have a certain structural strength to avoid the lithium dendrite from piercing the separator, the surface densities of the first ceramic coating (31) and the first nanofiber layer (2) have to be controlled. A ratio of the surface density of the first ceramic coating (31) to the surface density of the first nanofiber layer (2) may be ≤ 6:1. The first ceramic coating (31) may further contain a binder in addition to the ceramic powder (3). The binder may include one or more of polymethacrylate, polyacrylamide, styrenate, phenylacrylate, polyvinylidene fluoride and polyvinyl alcohol.

The first ceramic coating (31) may be formed by drying the ceramic slurry. To control the fluidity or viscosity of the ceramic slurry, the ceramic slurry may include a ceramic powder (3), a binder, and a coating material. The coating material may include one or more of a dispersant, a thickener, and a solvent. The solvent may include one or more of ethanol, acetone, NMP, isopropyl alcohol, and deionized water. The dispersant may include one or more of ammonium polyacrylate, amine polyacrylate, a styrene maleic anhydride polymer, and phosphoric acid ester. The thickener may include one or more of sodium carboxymethylcellulose, flake bentonite, and cohesive polyurethane.

To allow the nanofiber slurry to be arranged in a direction of expanding along a plane on the first ceramic coating (31), the nanofibers may be cross-stacked in a very thin thickness and extended in a plane to form a dense two-dimensional mesh-shaped structure. To avoid the nanofibers from tangling caused by extending in a height direction, resulting in a too large overall thickness of the separator and a loose structure of the first nanofiber layer (2) and being unable to resist effectively the puncture of the lithium dendrite, the nanofiber slurry may have a lower solid content and a lower binder content than the ceramic slurry. Specifically, the ceramic slurry may include the ceramic powder (3) of 25 wt%-35 wt% based on the ceramic slurry, the dispersant of 0.5 wt%-1.2 wt% based on the ceramic powder (3), the thickener of 1 wt%-1.5 wt% based on the ceramic powder (3), and the binder of 3 wt% to 6 wt% of based on the ceramic powder (3), and the remaining is the solvent.

In addition, the ceramic slurry or the nanofiber slurry is coated by means of a concave plate roller or a wire rod, but the coating process may be a manner commonly used in industry.

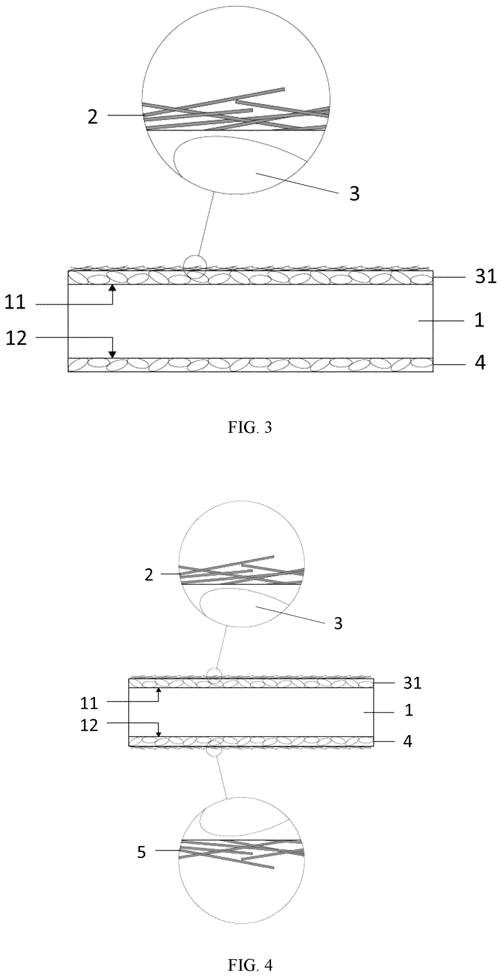

To control the overall thickness of the separator and provide corresponding thermal resistant protection, puncture strength, or a capacity retention rate of the battery, as shown in FIG. 3, the separator may further include a second ceramic coating (4) that is disposed on a second side (12) of the base membrane (1) relative to the first side (11). To control the overall thickness of the separator and provide corresponding thermal resistant protection, a puncture strength, or a capacity retention rate of the battery, as shown in FIG. 4, the separator may further include a second ceramic coating (4) that is disposed on a second side (12) of the base membrane (1) relative to the first side (11), and a second nanofiber layer (5) disposed on the second side (12) of the base membrane (1). The second ceramic coating (4) is positioned between the base membrane (1) and the second nanofiber layer (5). The second nanofiber layer (5) and the second ceramic coating (4) are configured corresponding to the first nanofiber layer (2) and the first ceramic coating (31), respectively. Therefore, the compositions, physical and chemical properties of the second nanofiber layer (5) and the second ceramic coating (4) may be referring to the description of the first nanofiber layer (2) and the first ceramic coating (31), which is not be repeated herein.

A method for preparing a separator presented in FIG. 1 is described herein. First, a slurry (also known as a "ceramic slurry") containing a ceramic powder (3) is coated on the first side (11) of a base membrane (1). Then, the slurry containing the ceramic powder (3) is dried to form a first ceramic coating (31). Thereafter, a slurry (also known as a "nanofiber slurry") containing nanofibers is coated on the side of the first ceramic coating (31) that is not in contact with the base membrane (1). Finally, the slurry containing the nanofibers is dried to form a first nanofiber layer (2).

In the structure shown in FIG. 3, the preparation method may further include the following steps: coating another slurry (also known as the "ceramic slurry") containing the ceramic powder (3) on the second side (12) of the base membrane (1); and drying the slurry containing the ceramic powder (3) to form a second ceramic coating (4). It is to be understood that these two steps may be carried out before the step of coating the slurry containing the ceramic powder (3) on the first side (11) of the base membrane (1), or may be carried out between the step of drying the slurry containing the ceramic powder (3) to form the first ceramic coating (31) and the step of coating the slurry containing the nanofibers on the side of the first ceramic coating (31) that is not in contact with the base membrane (1), or may be carried out after the step of drying the slurry containing the nanofibers to form a first nanofiber layer (2).

In the structure shown in FIG. 4, the preparation method may further include the following steps: coating the slurry (also known as the "ceramic slurry") containing the ceramic powder (3) on the second side (12) of the base membrane (1); drying the slurry containing the ceramic powder (3) to form the second ceramic coating (4); coating the slurry (also known as the "nanofiber slurry") containing the nanofibers on the side of the first ceramic coating (4) that is not in contact with the base membrane (1); and drying the slurry containing the nanofibers to form a second nanofiber layer (5). It is to be understood that the previous two steps may be carried out before the step of coating the slurry containing the ceramic powder (3) on the first side (11) of the base membrane (1), or may be carried out between the step of drying the slurry containing the ceramic powder (3) to form the first ceramic coating (31) and the step of coating the slurry containing the nanofibers on the side of the first ceramic coating (31) that is not in contact with the base membrane (1), or may be carried out after the step of drying the slurry containing the nanofibers to form the first nanofiber layer (2). The posterior two steps may be carried out before the step of coating the slurry containing the ceramic powder (3) on the first side (11) of the base membrane (1), or may be carried out between the step of drying the slurry containing the ceramic powder (3) to form the first ceramic coating (31) and the step of coating the slurry containing the nanofibers on the side of the first ceramic coating (31) that is not in contact with the base membrane (1), or may be carried out after the step of drying the slurry containing the nanofibers to form a first nanofiber layer (2). However, regardless of how the steps are carried out, the previous two steps are carried out before the posterior second two steps.

A process of preparing the nanofiber slurry is described herein. First, a dispersant is stirred and mixed with the nanofibers for at least 1 hour, so that the nanofibers are ball-milled and uniformly dispersed into the dispersant to obtain a first mixture. Next, the first mixture is stirred and mixed with a thickener for at least 30 minutes to obtain a second mixture. Then, the second mixture is stirred and mixed with a binder and a wetting agent to obtain the nanofiber slurry.

In this example, a proper raw material of the coating is selected and the surface density of the coating is controlled so that the first nanofiber layer (2) may protect the first ceramic coating (31) and the base membrane (1); or such that the second nanofiber layer (5) may protect the second ceramic coating (4) and the base membrane (1). A two-dimensional network-shaped porous structure can also promote liquid absorption and retention of a sample of the composite separator, so that the two-dimensional network-shaped porous structure can have better performance when applied to a lithium-ion battery.

Moreover, the efficacy of the present embodiment compared to the prior art is that the present embodiment first forms the first ceramic coating (31) with high density on the base membrane (1) to strengthen the support performance for the base membrane (1), so that when the separator is extruded by a force, the structural strength thereof can be maintained. Curling or deformation is not generated. Moreover, the first ceramic coating (31) may play a heat-resistant role in the base membrane (1) to enhance the overall thermal stability of the composite separator for the lithium-ion battery, thereby increasing a separator-breaking temperature of the separator, expanding a safety zone of the separator under the action of heat, thus improving the safety of the lithium-ion battery during a long period of time under the state of charging and discharging or at a high temperature. In addition, in this example, the nanofiber slurry is produced from the nanofibers with a specific particle size, specific surface area, and length-to-diameter ratio. The nanofiber slurry is coated on the first ceramic coating (31), so that the nanofibers may be interlaced and interspersed in a very thin thickness to form a two-dimensional mesh-shaped structure. The lithium ions may be uniformly deposited on the mesh-shaped structure to avoid the formation of the lithium dendrite due to the too high concentration of the lithium ions deposited in a certain region. Further, a force applied to a single point on the mesh-shaped structure may be uniformly spread to a surface from the point to significantly improve the structural strength of the separator and puncture strength, thereby effectively preventing the lithium dendrite from piercing the separator. In addition, because the mesh-shaped structure formed by the nanofiber contains a nearly two-dimensional planar shape, a thickness of the first nanofiber layer (2) may be controlled, so that when the separator is applied to the lithium-ion battery, the capacity of the lithium-ion battery may be enlarged or a volume of the lithium-ion battery may be reduced without affecting the capacity of the lithium-ion battery. The separator may thus be assembled in a more compact or more precise apparatus or instrument.

Further discussion is provided below with respect to the embodiment presented in FIG. 2:
The first nanofiber layer (2) at least includes the nanofibers and the ceramic powder (3). The first nanofiber layer (2) may have a thickness of 1 µm-1.5 µm, such as 1 µm, 1.1 µm, 1.2 µm, 1.3 µm, 1.4 µm, or 1.5 µm. The nanofibers may be amphiphilic nanofibers, and the amphiphilic nanofibers may include one or more of: amphiphilic nanocellulose, amphiphilic cellulose nanowhisker, amphiphilic cellulose nanofibril, and amphiphilic micro fibrillated cellulose. The ceramic powder (3) may include one or more of alumina, titanium oxide, boehmite, silicon nitride, boron carbide, and barium sulfate. In the amphiphilic nanofibers, hydrophilicity may promote the liquid absorption ability of the separator and enhance an infiltration speed of the electrolyte, while lipophilicity may improve the bonding ability between the nanofibers and the base membrane (1). The nanofibers are interwoven into a three-dimensional mesh-shaped structure, and cooperated with the ceramic powder (3) and a binder so that a bonding force between the first nanofiber layer (2) and the base membrane (1) is better. Further, it is less likely to produce problems such as powder fall, so as to enhance the mechanical performance of the separator. In addition, the addition of the nanofibers may improve the bonding force between the first nanofiber layer (2) and the base membrane (1) to a certain extent, so that a better bonding force may be achieved while reducing the amount of binder. The amount of the ceramic powder (3) and the nanofibers can be increased, so as to allow the first nanofiber layer (2) to have better mechanical performance and thermal stability. The total mass of the ceramic powder (3) and the amphiphilic nanofibers may account for 95 wt%-99 wt% of the first nanofiber layer (2) by mass, such as 95 wt%, 95.5 wt%, 96 wt%, 96.5 wt%, 97 wt%, 97.5 wt%, 98 wt%, 98.5 wt%, or 99 wt%. Specifically, the total mass of the ceramic powder (3) and the amphiphilic nanofibers accounts for 97 wt%-99 wt% of the first nanofiber layer (2) by mass. A mass ratio of the amphiphilic nanofibers to the ceramic powder (3) may be (1 to 20):100, such as 1:100, 2:100, 4:100, 6:100, 8:100, 10:100, 12:100, 14:100, 16:100, 18:100, or 20:100. Therefore, a bonding force between the first nanofiber layer (2) and the base membrane (1) may be higher. The denseness of the film can be higher to improve a tensile strength and a puncture strength of the separator. The addition amount of the ceramic powder (3) may be satisfied to a certain extent to cooperate with the amphiphilic nanofibers, which thus allows the separator to have better air permeability, higher infiltration, a high liquid absorption rate and a high liquid retention rate. Specifically, a mass ratio of the amphiphilic nanofibers to the ceramic powder (3) is (5 to 10):100.

The first nanofiber layer (2) may further include a binder. The binder may include one or more of: polyacrylamide, polybutyl methacrylate, poly-hydroxyethylmethacrylate, and polyvinyl alcohol. Hydrophilic groups of the amphiphilic nanofibers may include one or more of hydroxyl, carboxyl, amino, quaternary amine, aldehyde, sulfonic acid, and a phosphate group, while lipophilic groups may include one or more of alkyl, phenyl, and cycloalkyl. The presence of hydroxyl is conducive to improving a wetting speed of the separator. A large number of reactive hydroxyls exist on the surfaces of natural fibers. Only some of the reactive hydroxyls need to be converted into the lipophilic groups (e.g., alkyl) to allow the separator to have a high wetting speed, a high liquid absorption rate and a high liquid retention rate. Hence, the first nanofiber layer (2) and the base membrane (1) have also a higher bonding strength. Specifically, the hydrophilic groups of the amphiphilic nanofibers may include hydroxyl, while the lipophilic group may include alkyl.

The higher the thermal decomposition temperature of the amphiphilic nanofibers is, the higher the heat resistance and thermal stability of the separator are. In a high-temperature environment caused by battery operation, the separator can cope with stress release without significant thermal contraction, thereby preventing the contact of positive and negative electrode materials inside the battery from leading to an internal short circuit, and improving the safety performance of the battery. The amphiphilic nanofibers may have a thermal decomposition temperature of ≥275°C, such as 275°C, 280°C, 285°C, 290°C, 295°C, 300°C, 305°C, 310°C, 315°C, 320°C, 325°C, 330°C, 335°C, 340°C, 345°C, or 350°C. Specifically, the amphiphilic nanofibers 122 may have a thermal decomposition temperature of 275°C-340°C.

The amphiphilic nanofibers may have a density of ≤ 1.6 g/cm³, such as 1.05 g/cm³, 1.1 g/cm³, 1.15 g/cm³, 1.2 g/cm³, 1.25 g/cm³, 1.3 g/cm³, 1.35 g/cm³, 1.4 g/cm³, 1.45 g/cm³, 1.5 g/cm³, 1.55 g/cm³, or 1.6 g/cm³. Specifically, the amphiphilic nanofibers may have a density of ≥ 1.0 g/cm³ and ≤ 1.6 g/cm³. In addition, the amphiphilic nanofibers have a density more than one times smaller than the ceramic powder (3), which may further improve the infiltration speed of the separator, and also improve the mechanical performance of the separator. Therefore, on the premise that the density of the amphiphilic nanofibers is expressed as A1, the density of the ceramic powder (3) is expressed as A2, and the units of A1 and A2 are the same, the A1 may be <1/2 x A2.

The amphiphilic nanofiber may have a diameter of 4 nm to 20 nm, such as 4 nm, 6 nm, 8 nm, 10 nm, 12 nm, 14 nm, 16 nm, 18 nm, or 20 nm, and the length may be 100 nm to 500 nm, such as 100 nm, 150 nm, 200 nm, 250 nm, 300 nm, 350 nm, 400 nm, 450 nm, or 500 nm. The amphiphilic nanofiber may have a length-to-diameter ratio of 5-125, such as 5, 10, 15, 20, 25, 30, 35, 40, 45, 55, 65, 75, 85, 95, 105, 115, or 125. Under the condition of the same thickness of the first nanofiber layer (2), the above size specifications may allow the nanofibers to achieve multi-layer stacking in the first nanofiber layer (2), thereby improving the stacking performance of the first nanofiber layer (2) on the base membrane (1), and resulting in a better heat resistance of the separator. In addition, the above size specifications help the nanofibers form a more reasonable porosity with a lower internal resistance and form the mesh-shaped structure to cooperate better with the ceramic powder (3), so that the separator have a higher tensile strength, a high puncture strength, and better mechanical performance.

It is stated herein that the amphiphilic nanofibers with different thermal decomposition temperatures and different densities may be commercially and directly purchased on the market. Therefore, the preparation of the amphiphilic nanofibers with different thermal decomposition temperatures and different densities is not specified herein. In addition, commercially available cellulose nanofibers, cellulose nanowhiskers, cellulose nanofibril or microfibrillated celluloses are mostly hydrophilic in a structure. The amphiphilic nanocellulose (hydrophilic and lipophilic) mentioned herein is different from the commercially available nanocellulose (hydrophilic). The amphiphilic cellulose nanowhisker (hydrophilic and lipophilic) mentioned herein is different from the commercially available cellulose nanowhisker (hydrophilic). The amphiphilic cellulose nanofibril (hydrophilic and lipophilic) mentioned herein is different from the commercially available cellulose nanofibril (hydrophilic). The amphiphilic microfibrillated cellulose (hydrophilic and lipophilic) mentioned herein is different from the commercially available micro fibrillated cellulose (hydrophilic). Moreover, the amphiphilic nanocellulose, the amphiphilic cellulose nanowhisker, the amphiphilic cellulose nanofibril, and the amphiphilic microfibrillated cellulose mentioned herein may be purchased and obtained commercially. Therefore, the preparation of the amphiphilic nanocellulose, the amphiphilic cellulose nanowhisker, the amphiphilic cellulose nanofibril, and the amphiphilic microfibrillated cellulose are not specifically described herein.

The ceramic powder (3) may have a particle size D50 of 100 nm-1000 nm, such as 100 nm, 200 nm, 300 nm, 400 nm, 500 nm, 600 nm, 700 nm, 800 nm, 900 nm, or 1000 nm. With the cooperation between this specification size of the ceramic powder (3) and the specification size of the amphiphilic nanofiber (a diameter of 4 nm-20 nm, a length of 100 nm-500 nm, and a length-to-diameter ratio of 5-125), the ceramic powder (3) and the amphiphilic nanofiber may simultaneously play a heat-resistant role, resulting in the better heat resistance of the separator. In addition, a ratio of a particle size D50 of the ceramic powder (3) to a length of the amphiphilic nanofibers is 1:(1 to 2) under the condition that the particle size D50 of the ceramic powder (3) and the length of the amphiphilic nanofibers are in the same unit.

A method for preparing a separator presented in FIG. 2 is described herein. First, a coating slurry containing the ceramic powder (3) and the nanofibers is coated onto the first side (11) of the base membrane (1). Then, the coating slurry is dried to form the first nanofiber layer (2). Specifically, the ceramic powder (3) dispersion, the nanofiber dispersion, and the binder are first mixed to form a coating slurry. Then, the coating slurry is coated onto the first side (11) of the base membrane (1). Finally, the coating slurry is dried to form the first nanofiber layer (2). This process may allow the ceramic powder (3) and the nanofibers to be dispersed more uniformly into the coating slurry. Therefore, the ceramic powder (3) and the nanofibers are uniformly distributed into the formed separator, which may not only promote the liquid absorption ability of the separator through the hydrophilicity in the nanofibers to improve the wetting speed of a battery fluid, but also improve the bonding ability of the nanofibers to the base membrane (1) through the lipophilicity in the nanofibers. Moreover, the nanofibers are intertwined into a three-dimensional mesh-shaped structure, and then cooperated with the binder and the ceramic powder (3), so as to achieve a better bonding force between the ceramic powder (3) and the base membrane (1), and improve the mechanical performance of the separator.

More specifically, the solvent, the dispersant and the ceramic powder (3) are first mixed to form a ceramic powder dispersion. The dispersant, in addition to allowing the ceramic powder (3) to be uniformly dispersed in the ceramic powder dispersion, and reducing the agglomeration of the ceramic powder (3), can also be used as a dispersant in the coating slurry, and at the same time, can allow the other components in the coating slurry to be better dispersed. The dispersant can include: one or more of sodium polyacrylate, polyacrylamide, and polyphosphate. The solvent may include one or more of water, NMP, isopropyl alcohol, and acetone. The addition amount of ceramic powder (3) may account for 10 wt%-50 wt% of the ceramic powder dispersion, such as 10 wt%, 15 wt%, 20 wt%, 25 wt%, 30 wt%, 35 wt%, 40 wt%, 45 wt%, or 50 wt%, which is conducive to better dispersion of the ceramic powder (3) with a small particle size.

Next, the solvent and the nanofibers are mixed to form a nanofiber dispersion. The amphiphilicity of the nanofibers can be dispersed well in the solvent regardless of whether the solvent is an aqueous solvent or an oily solvent, thereby achieving better dispersion without the addition of the dispersant. The solvent may include one or more of water, NMP, isopropyl alcohol, and acetone. The addition amount of the nanofibers may account for 1 wt%-10 wt% of the nanofiber dispersion, such as 1 wt%, 2 wt%, 4 wt%, 6 wt%, 8 wt%, or 10 wt %, which is conducive to better dispersion of the nanofibers.

Then, the ceramic powder (3) dispersion and the nanofiber dispersion are mixed. Then, the binder is added to form the coating slurry. The coating slurry can also be added with other additives, such as: the wetting agent. The wetting agent may include one or more of siloxane, alkylphenol polyoxyethylene, and succinic acid. The composition of the coating slurry may be adjusted by a solvent. The total amount of solvent added may account for 88 wt%-99 wt% of the coating slurry, such as 88 wt%, 89 wt%, 90 wt%, 91 wt%, 92 wt%, 93 wt%, 94 wt%, 95 wt%, 96 wt%, 97 wt%, 98 wt%, or 99 wt%. The more the total addition amount of the solvent in the coating slurry, the better the orientation of the nanofibers, which is conducive to the better fiber crosslinking regularity of the first nanofiber layer (2) formed subsequently, and thus the better performance of the nanofibers. Specifically, the total addition amount of the solvent accounts for 95 wt%-99 wt% of the coating slurry. The total addition amount of the ceramic powder (3) may account for 1 wt%-10 wt% of the coated slurry, such as 1 wt%, 2 wt%, 3 wt%, 4 wt%, 5 wt%, 6 wt%, 7 wt%, 8wt%, 9 wt%, or 10wt%. The total addition amount of the nanofibers may account for 0.1 wt%-1 wt% of the coated slurry, such as 0.1 wt%, 0.2 wt%, 0.3 wt%, 0.4 wt%, 0.5 wt%, 0.6 wt%, 0.7 wt%, 0.8 wt%, 0.9 wt%, or 1 wt%. The total addition amount of the binder may account for 0.01 wt%-0.4 wt% of the coated slurry, such as 0.01 wt%, 0.02 wt%, 0.03 wt%, 0.04 wt%, 0.05 wt%, 0.06 wt%, 0.07 wt%, 0.08 wt%, 0.09 wt%, 0.1 wt%, 0.2 wt%, 0.3wt%, or 0.4wt%. The total addition amount of the dispersant may account for 0.01 wt%-0.1 wt% of the coated slurry, such as 0.01 wt%, 0.02 wt%, 0.03 wt%, 0.04 wt%, 0.05 wt%, 0.06 wt%, 0.07 wt%, 0.08 wt%, 0.09 wt%, or 0.1 wt%.

Finally, the coating slurry is coated to the first side (11) of the base membrane (1), and dried to obtain the separator. A coating method can adopt a concave plate roller, a wire rod, or a spraying method. Drying may be carried out in an oven.

Previously, a ceramic coating is formed on the base membrane as the separator. However, the infiltration of the electrolyte to the ceramic coating is not good, resulting in the worse water absorption of the electrolyte by the separator, which is not conducive to the transport and migration of the lithium ions. To increase the infiltration of the separator to the electrolyte, if the nanofibers are added to the ceramic coating, the surfaces of the nanofibers have a large amount of active hydroxyls, which are hydrophilic so that the infiltration of the coating to the electrolyte can be enhanced. However, it is found that the addition of the nanofibers brings new problems to the separator, for example: the separator is inevitably prepared or used in an aqueous environment. The surfaces of the nanofibers have a large amount of active hydroxyls. Due to the strong hydrophilicity of active hydroxyls and the action of the water molecules, the bonding of an internal hydrogen bond is prone to fracture, so that the mechanical performance of the separator decreases in a humid environment. Further, for example, the base membrane of the separator is generally hydrophobic while the nanofibers are hydrophilic, which leads to the insufficient bonding ability between the coating and the base membrane. Therefore, the coating and the base membrane easily peel off, which results in curling of the separator, and the poor mechanical performance of the separator. In this example, the hydrophilicity of the nanofibers can promote the liquid absorption ability of the separator and enhance the infiltration speed of the electrolyte, while lipophilicity can improve the bonding ability between the nanofibers and the base membrane (1). The nanofibers are interwoven into the three-dimensional mesh-shaped structure and cooperate with the binder and the ceramic powder (3) so that the bonding force between the first nanofiber layer (2) and the base membrane (1) is better, thereby enhancing the mechanical performance of the separator. Therefore, the separator of the present embodiment can be used to prepare the battery.

The following illustrative examples describe the present application:
Examples A1-A19 and Comparative Examples A1-A3 describe the influence of a difference in a laminate structure and the different properties of the materials used in the laminate structure on performance parameters of a sample of the obtained composite separator.

### Example A1

A sample of a composite separator of this example included in order in an extension direction: a base membrane; a first ceramic coating which was formed by coating a ceramic slurry on the first side of the base membrane and drying the ceramic slurry; and a first nanofiber coating which was formed by coating a nanofiber slurry on the side of the first ceramic coating not in contact with the base membrane and drying the nanofiber slurry. The base membrane used in this example was a polyethylene film. The base membrane had a thickness of 7 µm, and had the characteristics of high porosity, a high mechanical strength, a low closing-pore temperature and a high separator-breaking temperature. Due to the perfect preparation process of the base membrane, good homogeneity, outstanding mechanical performance and good heat resistance, the combination of the base membrane and the first ceramic coating could increase a thickness and a space of the first ceramic coating. The first ceramic coating used in this example had a surface density of 1.5 g/m². The first nanofiber coating used in this example had a surface density of 0.6 g/m².

A method for preparing the used ceramic slurry included: (S1a): mixing ammonium polyacrylate with an alumina powder and stirring for at least 1hr, so that the alumina powder was ball-milled and uniformly dispersed into ammonium polyacrylate, obtaining a first mixture, where a weight ratio of the ammonium polyacrylate to the alumina powder was 1:200; (S2a): mixing the first mixture with sodium carboxymethyl cellulose and stirring for 30 min, obtaining a second mixture, where sodium carboxymethyl cellulose was a transparent and clarified solution obtained by stirring water and CMC at 2,000 rpm for more than 1 hr, with a concentration of 4%, and the CMC accounted for 1% of a total solid weight of the alumina powder; and (S3a): stirring and mixing the second mixture with ammonium polyacrylate and succinic acid, to obtain a ceramic slurry with a solid content of 35 wt%, where the ammonium polyacrylate accounted for 3% of the total solid weight of the alumina powder, and the succinic acid accounted for 0.01% of the total solid weight of the alumina powder.

A method for preparing a nanofiber slurry used included: (S1b): mixing ammonium polyacrylate with barium dititanate nanowires and stirring for at least 1hr, so that the barium dititanate nanowires were ball-milled and uniformly dispersed into ammonium polyacrylate, obtaining a third mixture, where a weight ratio of ammonium polyacrylate to the barium dititanate nanowires was 1:200, and the barium dititanate nanowires had a particle size D 50 of 2 µm, a specific surface area of 15 m²/g and a length-to-diameter ratio of 60; (S2b): mixing the third mixture with sodium carboxymethyl cellulose and stirring for 30min, obtaining a fourth mixture, where the sodium carboxymethyl cellulose was a transparent and clarified solution obtained by stirring water and CMC at 2,000 rpm for more than 1 hr, with a concentration of 4%, and the CMC accounted for 1.5 wt% of a total solid weight of the barium dititanate nanowires; (S3b): stirring and mixing the fourth mixture with ammonium polyacrylate and succinic acid, to obtain the nanofiber slurry with a solid content of 10 wt%, where ammonium polyacrylate accounted for 1.5% of the total solid weight of a nanofiber powder, and succinic acid accounted for 0.01% of the total solid weight of the nanofiber powder.

### Examples A2-A5

Examples A2-A5 described the influence of the particle size and specific surface area of nanofibers on performance parameters of the sample of the composite separator, where:
Example A2 differed from Example A1 in that the nanofibers used had a particle size of 0.5 µm and a specific surface area of 20 m²/g;
Example A3 differed from Example A1 in that the nanofibers used had a particle size of 6.5 µm and a specific surface area of 2 m²/g;
Example A4 differed from Example A1 in that the nanofibers used had a particle size of 0.3 µm and a specific surface area of 27 m²/g;
Example A5 differed from Example A1 in that the nanofibers used had a particle size of 7 µm and a specific surface area of 1.5 m²/g.

### Examples A6-A9

Examples A6-A9 described the influence of the length-to-diameter ratio of nanofibers on performance parameters of a sample of a composite separator, where:
Example A6 differed from Example A1 in that the nanofibers used had a length-to-diameter ratio of 20;
Example A7 differed from Example A1 in that the nanofibers used had a length-to-diameter ratio of 120;
Example A8 differed from Example A1 in that the nanofibers used had a length-to-diameter ratio of 10;
Example A9 differed from Example A1 in that the nanofibers used had a length-to-diameter ratio of 100.

### Examples A10-A12

Examples A10-A12 described the influence of the mass ratio of a binder to a total weight of nanofibers in a nanofiber slurry on performance parameters of a sample of a composite separator, where:
Example A10 differed from Example A1 in that a mass ratio of the binder used in the preparation of a nanofiber slurry to a total weight of nanofibers was 1 wt%;
Example A11 differed from Example A1 in that the mass ratio of the binder used in the preparation of the nanofiber slurry to the total weight of the nanofibers was 2 wt%;
Example A12 differed from Example A1 in that the mass ratio of the binder used in the preparation of the nanofiber slurry to the total weight of the nanofibers was 3 wt%.

### Examples A13-A15

Examples A13-A15 described the influence of a mass ratio of nanofibers to a total weight of a nanofiber slurry on performance parameters of a sample of a composite separator, where:
Example A13 differed from Example A1 in that a mass ratio of nanofibers used in the preparation of the nanofiber slurry to a total weight of the nanofiber slurry was 5 wt%;
Example A14 differed from Example A1 in that the mass ratio of the nanofibers used in the preparation of the nanofiber slurry to the total weight of the nanofiber slurry was 2 wt%;
Example A15 differed from Example A1 in that the mass ratio of the nanofibers used in the preparation of the nanofiber slurry to the total weight of the nanofiber slurry was 15 wt%.

### Examples A16 and A17

Examples A16 and A17 described the influence of a surface density of a first nanofiber coating and a surface density of a first ceramic coating on performance parameters of a sample of composite separator, where:
Example A16 differed from Example A1 in that the first ceramic coating formed on a base membrane had a surface density of 1.8 g/m², and the first nanofiber coating formed on the first ceramic coating had a surface density of 0.3 g/m²;
Example A17 differed from Example A1 in that the first ceramic coating formed on a base membrane had a surface density of 1.9 g/m², and the first nanofiber coating formed on the first ceramic coating had a surface density of 0.2 g/m².

### Examples A18 and A19

Example A18 differed from Example A1 in that a second ceramic coating was formed on the second side of a base membrane;
Example A19 differed from Example A18 in that a second nanofiber coating was formed on the side of the second ceramic coating that is not in contact with the base membrane.

### Comparative Example A1:

Comparative Example A1 differed from Example A1 in that a first ceramic coating and a second ceramic coating were formed on the first side and the second side of the base membrane, respectively; but a nanofiber coating was not formed on the first ceramic coating and the second ceramic coating, where the first ceramic coating and the second ceramic coating both had a surface density of 2.1 g/m².

### Comparative Example A2:

Comparative Example A2 differed from Example A1 in that a first nanofiber coating was formed on the first side of the base membrane, where the first nanofiber coating had a surface density of 2.1 g/m².

### Comparative Example A3:

Comparative Example A3 differed from Example A1 in that a ceramic slurry and a nanofiber slurry were mixed to form a mixed slurry and coated on the first side of the base membrane; and the mixed slurry was cooled to form a mixed coating to obtain a sample of a composite separator, where the mixed coating had a surface density of 2.1 g/m².

Performance parameters of the samples of the composite separators in Examples A1-A19 and Comparative Examples A1-A3 were tested by referring to the following methods:

### Thickness:

A measuring tool used was a Mahr Millimar thickness gauge. First, the surface of the sample of the composite separator was maintained flat. Then, thicknesses of 5 to 10 random points on the sample of the composite separator in a longitudinal (MD) direction were measured. Then, obtained measurement results were averaged to measure a thickness of the sample of the composite separator.

### Surface density:

Three test samples with the same area were taken from the sample of the composite separator. A thickness (H), area (S), and mass (m) of each test sample were obtained using a weighing method. A surface density of the test sample was calculated in accordance with standards stipulated in GB/T 6343-2009, where a formula for calculating the surface density (ρ) is as follows: ρ=m/(H*S). Then, the obtained results were averaged to measure a surface density of the sample of the composite separator.

### Photography of a scanning electron microscope (SEM):

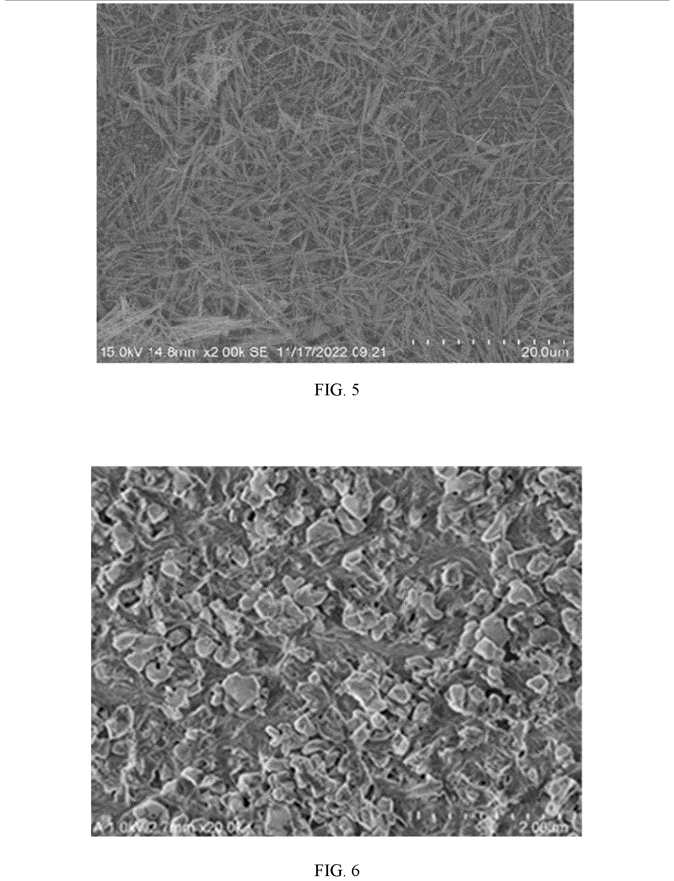

A test sample with a length and a width in 0.5cm * 0.5cm was taken from the sample of the composite separator. A conductive adhesive was used to paste the test sample on a sample table. The test sample was placed in an ion sputtering instrument and sprayed with gold. Finally, the test sample after being sprayed with gold was scanned and tested using a scanning electron microscope to shoot a morphology of the coating on the test sample. FIG. 5 shows image results of the first nanofiber coating on the test sample captured by the scanning electron microscope.

### Air permeability:

An EG01 Oken-type air-permeability tester was used as a measurement tool. Any three points on the sample of the composite separator were selected. Average time required for each point to pass through 100 ml of an air was measured. Three sets of test results were averaged to obtain an average value. Therefore, the air permeability of the sample of the composite separator was measured.

### Puncture strength:

3 pieces of test samples on the sample of the composite separator were taken. Each piece of test sample had a length and a width not less than 5 cm*5 cm. The test sample was fixed on the sample table. The puncture strength was measured using a puncture needle with a diameter (ϕ) of 1.65 mm, a needle tip (SR) of 0.5 mm and an electronic puncture strength tester. Then, after a test was completed, 3 sets of test results were averaged to measure the puncture strength of the sample of the composite separator.

### Liquid absorption rate and liquid retention rate:

Three pieces of test samples with a length and a width in 100 mm*100 mm were taken from the sample of the composite separator. An initial weight (m0) of each test sample was weighed. The test sample was taken out after being placed in an electrolyte to be sealed and immersed for 1 hr. The electrolyte on the surface of the test sample was wiped clean with a dust-free cloth. Then, an absorbed weight (m1) of the test sample was weighed. The weighed test sample was spread flat. After the test sample stood at room temperature for 1 hr, a liquidretention weight (m2) of the test sample was weighed, where a liquid absorption rate of the test sample = ((m1-m0))/m0*100%; and the liquid retention rate = ((m2-m0))/m0*100%. Finally, the above three sets of experimental data were measured and averaged to measure the liquid absorption rate and the liquid retention rate of the sample of the composite separator.

### Cycling performance:

The sample of the composite separator was tested electrochemically, and charged and discharged for 500 times. Then, a capacity retention rate was measured to measure the cycling performance of the sample of the composite separator.

The selection for raw materials of the coatings used in Examples A1-A19 and Comparative Examples A1-A3, a surface density of the coated coating, and the performance parameters of the sample of the composite separator were organized in the following Tables 1 and 2.

**Table 1: Measurement results of the parameters of the sample of the composite separator**

| | | | Example A1. | Example A2. | Example A3. | Example A4. | Example A5. | Example A6. | Example A7. | Example A8. | Example A9. | Example A10. | Example A11. |
|---|---|---|---|---|---|---|---|---|---|---|---|---|---|
| A raw material of the first nanofiber coating or a second nanofiber coating | Nanofiber | Particle size (µm) | 2 | 0.5 | 6.5 | 0.3 | 7 | 2 | 2 | 2 | 2 | 2 | 2 |
| | | Specific surface area (m²/g) | 15 | 20 | 2 | 27 | 1.5 | 15 | 15 | 15 | 15 | 15 | 15 |
| | | Length-to-diameter ratio | 60 | 60 | 60 | 60 | 60 | 20 | 120 | 10 | 100 | 60 | 60 |
| | Nanofiber slurry | A mass ratio of the nanofibers to a total weight of | 10 | 10 | 10 | 10 | 10 | 10 | 10 | 10 | 10 | 10 | 10 |
| | | the nanofiber slurry (wt%) | | | | | | | | | | | |
| | | A mass ratio of a binder to a total weight of the nanofibers (wt%) | 1.5 | 1.5 | 1.5 | 1.5 | 1.5 | 1.5 | 1.5 | 1.5 | 1.5 | 1 | 2 |
| A surface density of the first nanofiber coating and/or the second nanofiber coating (g/m²) | | | 0.6 | 0.6 | 0.6 | 0.6 | 0.6 | 0.6 | 0.6 | 0.6 | 0.6 | 0.6 | 0.6 |
| A surface density of a first ceramic coating and/or a second ceramic coating (g/m²) | | | 1.5 | 1.5 | 1.5 | 1.5 | 1.5 | 1.5 | 1.5 | 1.5 | 1.5 | 1.5 | 1.5 |
| Performance parameters of the sample of the composite separator | Thickness (µm) | | 8.5 | 8.4 | 8.6 | 8.2 | 8.7 | 8.7 | 9.1 | 10.2 | 8.4 | 8.5 | 8.5 |
| | Surface density (g/m²) | | 6.5 | 6.5 | 6.5 | 6.5 | 6.5 | 6.5 | 6.5 | 6.5 | 6.5 | 6.5 | 6.5 |
| | Air permeability (s/100ml) | | 122 | 140 | 119 | 165 | 129 | 131 | 135 | 158 | 127 | 117 | 129 |
| | MD heat shrinkage % (180°C*1hr) | | 1.3 | 1.7 | 1.9 | 35 | 41 | 2.0 | 25 | 32 | 1.9 | 1.9 | 1.7 |
| | TD heat shrinkage % (180°C*1hr) | | 1.1 | 1.6 | 1.9 | 32 | 37 | 1.8 | 21 | 26 | 1.8 | 1.9 | 1.4 |
| | Internal resistance (Ω*cm²) | | 1.2 | 1.3 | 1.3 | 1.3 | 1.3 | 1.3 | 1.4 | 1.5 | 1.4 | 1.1 | 1.4 |
| | Voltage resistance (V) | | 1735 | 1701 | 1699 | 1550 | 1575 | 1711 | 1519 | 1480 | 1697 | 1711 | 1709 |
| | Separator-breaking temperature °C) | | 180 | 176 | 171 | 168 | 164 | 171 | 161 | 156 | 172 | 173 | 174 |
| | Puncture strength (gf) | | 551 | 534 | 547 | 521 | 526 | 539 | 516 | 500 | 541 | 545 | 541 |
| | Liquid absorption rate (%) | | 239 | 229 | 224 | 218 | 222 | 232 | 217 | 205 | 235 | 231 | 229 |
| | Liquid retention rate (%) | | 150 | 136 | 135 | 123 | 126 | 140 | 122 | 115 | 137 | 143 | 142 |
| | Capacity retention rate (%) after 500 cycles | | 92.2 | 90.1 | 89.6 | 85.7 | 86.1 | 90.2 | 85.5 | 84.2 | 90.1 | 91.1 | 90.5 |

**Table 2: Measurement results of the parameters of the sample of the composite separator**

| | | | Example A12. | Example A13. | Example A14. | Example A15. | Example A16. | Example A17. | Example A18. | Example A19. | Compar ative Example A1 | Compar ative Example A2 | Compar ative Example A3 |
|---|---|---|---|---|---|---|---|---|---|---|---|---|---|
| Raw materials of the first nanofiber coating or the second nanofiber coating | Nanofib er | Particle size (µm) | 2 | 2 | 2 | 2 | 2 | 2 | 2 | 2 | / | 2 | 2 |
| | | Specific surface area (m²/g) | 15 | 15 | 15 | 15 | 15 | 15 | 15 | 15 | / | 15 | 15 |
| | | Length-to-diameter ratio | 60 | 60 | 60 | 60 | 60 | 60 | 60 | 60 | / | 60 | 60 |
| | Nanofib er slurry | The mass ratio of the nanofibers to the total weight of the nanofiber slurry (wt%) | 10 | 5 | 2 | 15 | 10 | 10 | 10 | 10 | / | 10 | 10 |
| | | The mass ratio of the binder to the total weight of the nanofibers (wt%) | 3 | 1.5 | 1.5 | 1.5 | 1.5 | 1.5 | 1.5 | 1.5 | / | 1.5 | 1.5 |
| The surface density of the first nanofiber coating and/or the second nanofiber coating (g/m²) | | | 0.6 | 0.6 | 0.6 | 0.6 | 0.3 | 0.2 | 0.6 | 0.6 | / | 2.1 | 2.1 |
| The surface density of the first ceramic coating and/or the second ceramic coating (g/m²) | | | 1.5 | 1.5 | 1.5 | 1.5 | 1.8 | 1.9 | 1.5 | 1.5 | 2.1 | / | 2.1 |
| Performance parameters of the sample of the composite separator | Thickness (µm) | | 9.5 | 8.2 | 9.2 | 9.3 | 8.4 | 8.3 | 9.5 | 10.0 | 9.6 | 11.6 | 8.5 |
| | Surface density (g/m²) | | 6.5 | 6.5 | 6.5 | 6.5 | 6.5 | 6.5 | 8.3 | 8.8 | 8.8 | 6.5 | 6.5 |
| | Air permeability (s/100ml) | | 160 | 115 | 135 | 140 | 126 | 130 | 135 | 145 | 130 | 155 | 177 |
| | MD heat shrinkage % (180°C*1hr) | | 39 | 1.8 | 28 | 22 | 1.9 | 19 | 1.3 | 0.6 | 65 | 45 | 42 |
| | TD heat shrinkage % (180°C*1hr) | | 33 | 1.6 | 23 | 19 | 1.9 | 16 | 1.1 | 0.4 | 58 | 37 | 35 |
| | Internal resistance (Ω*cm²) | | 1.5 | 1.2 | 1.3 | 1.3 | 1.3 | 1.3 | 1.3 | 1.3 | 0.9 | 1.6 | 1.6 |
| | Voltage resistance (V) | | 1507 | 1721 | 1530 | 1511 | 1671 | 1559 | 1766 | 1955 | 1437 | 1507 | 1519 |
| | Separator-breaking temperature (°C) | | 155 | 172 | 151 | 152 | 169 | 165 | 185 | 220 | 138 | 146 | 147 |
| | Puncture strength (gf) | | 509 | 533 | 502 | 511 | 542 | 522 | 553 | 599 | 432 | 506 | 499 |
| | Liquid absorption rate (%) | | 211 | 235 | 201 | 204 | 221 | 216 | 242 | 321 | 145 | 201 | 167 |
| | Liquid retention rate (%) | | 119 | 141 | 111 | 112 | 143 | 126 | 155 | 193 | 70 | 115 | 126 |
| | Capacity retention rate (%) after 500 cycles | | 84.8 | 91.2 | 83.2 | 83.5 | 90.5 | 86.1 | 92.3 | 96.3 | 82.4 | 83.9 | 84.8 |

The following specifies the structural characteristics of a sample of a composite separator of Examples A1-A19 and Comparative Examples A1-A3. The structure of a composite separator of a lithium-ion battery provided in Examples A1-A17 can be referred to FIG. 1 and sequentially includes: a base membrane, a first ceramic coating, and a first nanofiber coating. The structure of a composite separator of a lithium-ion battery of Example A18 can be referred to Fig. 3, and sequentially includes the first nanofiber coating, the first ceramic coating, the base membrane, and a second ceramic coating. The structure of a composite separator of a lithium-ion battery of Example A19 can be referred to Fig. 4 and sequentially includes the first nanofiber coating, the first ceramic coating, the base membrane, and the second ceramic coating. The structure of a sample of a composite separator of Comparative Example A1 sequentially includes the first nanofiber coating, the base membrane, a second ceramic coating. The structure of a sample of a composite separator of Comparative Example A2 sequentially includes the first nanofiber coating and the base membrane. The structure of a sample of a composite separator of Comparative Example A3 sequentially includes a mixed coating formed after drying of a mixed slurry formed by a nanofiber slurry mixed with a ceramic slurry, and a base membrane.

In Comparative Example A1, a first ceramic coating is formed on the base membrane. Therefore, a thin first nanofiber coating is additionally formed on the first ceramic coating, so that a heat resistance, a puncture strength, and a cycle life of the sample of the composite separator can be improved. Specifically, in Comparative Example A1, nanofibers with a specific length-to-diameter ratio are selected so that a porous interwoven network structure is formed between the nanofibers. Further, because the nanofibers are intertwined with each other, an interaction force between the molecular chains is enhanced, so that the overall structural strength of the sample of the composite separator can be improved. When the sample of the composite separator is stressed, a stress point spreads a force from a point to a surface to evenly disperse an external puncture or an extrusion force to which the sample of the composite separator is subjected. Because the first nanofiber coating is not easily damaged, a voltage resistance and a puncture resistance of the sample of the composite separator can be improved. In addition, because the thin first nanofiber coating can control an overall thickness of the sample of the composite separator, the lithium-ion battery can be made thinner and lighter, or the battery can have a higher battery capacity when the volume of the battery is consistent.

Example A1 are compared with other embodiments and other Comparative Examples and described below:
Please refer to the test results of Comparative Examples A1-A5. In Comparative Example A4, when the nanofibers have a too small particle size and a too large specific surface area, the surface energy of the nanofibers is too high, so that the nanofibers are prone to being agglomerated and entangled with each other and agglomerated into bundles. Therefore, a planar network structure cannot be formed. Therefore, the first nanofibers coating has a too thick local coating thickness or too high densification and cannot be uniformly adhered to the first ceramic coating or the base membrane, which leads to a situation in which there is a large area of leakage of the coating. In addition, in Comparative Example A5, when the nanofibers have a too large particle size and a too small specific surface area, the nanofibers have a too low interweaving density under the same surface density or the same thickness of the first nanofiber coating, resulting in the formation of a loose coating structure, which is not able to effectively form a network-shaped structure. In summary, when the nanofibers have an inappropriate particle size and an inappropriate specific surface area, performance parameters of the sample of the composite separator such as a thermal performance, a cycling performance, a liquid absorption rate, and a liquid retention rate are affected. Specifically, referring to Examples A1--A3, because the nanofibers used have an appropriate particle size and an appropriate specific surface area, compared to Comparative Examples A4 and A5, a thermal shrinkage rate can be reduced. The voltage resistance strength can be improved. A separator-breaking temperature can be improved. Further, the nanofibers have a higher separator-breaking temperature, a higher puncture strength, a higher liquid absorption rate, a higher liquid retention rate, and a higher capacity retention rate.

Please refer to Examples A1, and A6-A9. In Example A8, when the nanofibers have a too small length-to-diameter ratio, the nanofibers are difficult to be crossed and overlaid, resulting in a loose structure of the first nanofiber coating. Specifically, the nanofibers are vertically crossed and stacked in a height direction, the coating is presented as a three-dimensional mesh-shaped arrangement and is not planar. Moreover, due to large gaps and a weak friction between the nanofibers, the nanofibers have poor mechanical performance, cannot effectively conduct a stress, and are prone to having a fell powder or a puncture to produce perforation when a force is applied at a single point. In addition, in Example A9, when the nanofibers have a too large length-to-diameter ratio, the nanofibers are easily entangled with each other, thereby destroying the distribution uniformity of the nanofibers, or leading to an uneven density of the network structure, which affects the coating performance. In summary, the first nanofiber coating of Examples A8 and A9 fail to improve a heat resistance and a puncture resistance in application. Thicknesses of the nanofibers cannot be easily controlled during a coating process, resulting in an uneven surface. In Examples A1, A6 and A7, because the nanofibers with an appropriate length-to-diameter ratio are used, the nanofibers can be stacked and arranged to form a two-dimensional mesh-shaped structure, which greatly improves a mechanical strength and property of the sample of the composite separator, and avoids the separator from being punctured. In addition, the formation of the mesh-shaped structure can improve a liquid absorption rate and a liquid retention rate of the sample of composite separator.

After test results of Examples A1-A9 are summarized, it can be found that the particle size, the specific surface area, or the length-to-diameter ratio of the nanofibers are adjusted so that a density of the nanofibers that are crossed and arranged can be improved. Further, the first nanofiber coating can be stacked with a higher density under a very thin thickness. Understandably, when the nanofibers form a denser porous two-dimensional network structure in a plane, a heat resistance and a mechanical performance of the first nanofiber coating can be enhanced without an increase in a thickness of the coating or an internal resistance.

Please refer to Example A1 and Examples A10 to A12. A binder is a key substance that determines a bonding strength between the coatings. when the binder has a too low content, the first nanofiber coating cannot be firmly adhered to the first ceramic coating. To reduce the internal resistance, the amount of the binder used in the first nanofiber coating needs to be controlled. Specifically, because the binder added in Example A12 has a content twice as much as the binder added in Example A1 does, the sample of the composite separator of Example A12 has higher air permeability and the higher internal resistance than the sample of the composite separator of Example A1 does. In addition, because Examples A1, A10, and A11 reduce the content of a polymer with a high molecular weight and a high viscosity, the ductility of the nanofiber slurry can be promoted to avoid agglomeration or entanglement between the nanofibers therein, which results in an increase in a thickness of the coating and affects an overall performance.

Please refer to Examples A1, and A13-A15. In Example A14, because the nanofibers have a too low mass ratio, the network structure formed after the nanofiber slurry is coated on the first ceramic coating and cured is sparse, resulting in a low coverage of the first ceramic coating. In Example A15, because the nanofibers have a too high mass ratio, the nanofibers are not able to be disposed in a direction of expanding along a plane and form a two-dimensional mesh-shaped structure in the nanofiber slurry during a process of preparation and coating of the obtained nanofiber slurry, but are prone to form a three-dimensional structure with vertical crossings.

Please refer to Example A1 and Examples A16 to A17. Because the first ceramic coating has a high density and a certain thickness and weight, and the first nanofiber coating is thin, light, bendable and flexible, the first nanofiber coating can form an interlaced network structure and has a large number of pores. If a ratio of a surface density of the first ceramic coating to a surface density of the first nanofiber coating is too high, a pore plugging situation occurs, resulting in the high overall air permeability, the high internal resistance, and a poor heat resistance of the composite separator of the lithium-ion battery. In Example A1, a ratio of the surface density of the first ceramic coating to the surface density of the first nanofiber coating is 2.5:1. In Example A16, the ratio of the surface density of the first ceramic coating to the surface density of the first nanofiber coating is 6:1. In Example A17, the ratio of the surface density of the first ceramic coating to the surface density of the first nanofiber coating is 9.5: 1. Due to the high ratio of the surface density in Example A17, the sample of the composite separator obtained has the high air permeability, the high internal resistance and the poor heat resistance. However, this problem does not exist in Examples A1 and A16.

Please refer to Examples A1-A18. In Example A18, the first ceramic coating and the second ceramic coating are formed on both sides of the base membrane. The first ceramic coating and the second ceramic coating have larger thicknesses and surface densities than the first ceramic coating and the second ceramic coating of Example A1 do. The heat resistance, the pinch strength, and the cycling stability of the separator of Example A18 are not significantly different from those of Example A1.

Please refer to Examples A1-A19. Example A19 is the best embodiment of the present application, in which the first ceramic coating and the first nanofiber coating are formed on one side of the base membrane in an inside-out sequence, and the second ceramic coating and a second nanofiber coating are formed on the other side of the base membrane in the inside-out sequence. The sample of the composite separator of Example A19 has a lower thermal shrinkage rate, a higher voltage resistance value, a higher separator-breaking temperature, a higher puncture strength, a higher liquid absorption rate, and a higher liquid retention rate compared to the other embodiments. The sample of the composite separator of Example A19 has still an over 95% capacity retention rate after 500 times of charging and discharging tests, indicating that the first nanofiber coating is formed on the both sides, respectively and that the second nanofiber coating can indeed promote the stability of a charging and discharging cycle of the sample of the composite separator.

Example A1 is compared with Comparative Examples A1 and described below:
Due to the higher surface density of the first ceramic coating in Comparative Example A1, the first ceramic coating has a dense structure, and the sample of the composite separator has higher overall thickness and surface density than the sample of the composite separator of Example A1 does. However, the sample of the composite separator of Comparative Example A1 has a low heat resistance and hence is prone to being contracted due to heat generated during charging and discharging processes. Moreover, the composite separator of Comparative Example A1 has a lower puncture strength than the sample of the composite separator of Comparative Example A1. Therefore, the sample of the composite separator of Comparative Example A1 has low structural strength, and thus, is prone to be broken due to a temperature, or the puncture of a lithium dendrite. Further, positive and negative electrodes in the battery come into contact with each other, which results in the battery being short-circuited. However, the sample of the composite separator of Comparative Example A1 can stably transmit lithium ions during charging and discharging of the battery and mechanically isolate the positive and negative electrodes, thus enhancing safety in use and maintaining the service life.

Example A1 is compared with Comparative Example A2 and A3 and described in the following.

The nanofibers with high surface energy tend to agglomerate and entangle in a polymer matrix. Therefore, whether the nanofiber slurry is directly coated on the base membrane or mixed with the ceramic slurry on the base membrane, the density distribution of the slurry is uneven, and the phenomenon of leakage occurs, so that the nanofibers in the first nanofiber coating may not be evenly dispersed and arranged in a direction of expanding along a plane, which results in the first nanofiber coating not being able to properly perform a function. Due to the poor heat resistance and stress performance of the base membrane, if the first ceramic slurry or the first nanofiber slurry cannot completely cover the base membrane, an exposed portion of a surface layer of the base membrane is directly affected by heat and stressed, resulting in the base membrane being susceptible to puncture, rupture, or fracture, and losing a function of separating the positive and negative electrodes. In addition, due to the strong hydrophobicity of the base membrane, the surface of the base membrane has poor affinity to an electrolyte, which is not conducive to sufficient wetting of the electrolyte on the surface thereof. Therefore, if the first nanofiber coating fails to completely cover the base membrane, the internal resistance of the sample of the composite separator increases as a whole, which affects the cycling performance and the charging and discharging efficiency of the battery.

In summary, a raw material of the coating is properly selected and the surface density of the coating is controlled so that the first nanofiber layer can protect the first ceramic coating and the base membrane; or the second nanofiber layer can protect the second ceramic coating and the base membrane. A two-dimensional network-shaped porous structure can also promote liquid absorption and retention of the sample of the composite separator, so that the two-dimensional network-shaped porous structure can perform better when applied to the lithium-ion battery.

Examples B1-B12 and Comparative Examples B1-B4 describe the influence of the different properties of the nanofibers used in the laminate structure on the performance parameters of the sample of the obtained composite separator.

### Examples B1-B12 and Comparative Examples B1-B4

A method for preparing a composite separator of Examples B1-B12 and Comparative Examples B1-B4 was carried out using the following steps, but please referred to Tables 3 and 4 for differences:
(1) adding a dispersant (BYK) to a deionized water and stirring at a high speed for 10 min. An alumina ceramic powder was added to a dispersion system. The alumina ceramic powder had a mass concentration of 30%, and was added in two times, stirred and ground evenly, where a mass ratio of the dispersant to the alumina ceramic powder was 1:100.
(2) adding amphiphilic nanocellulose to the deionized water and stirring to obtain the amphiphilic nanofiber dispersion, where the amphiphilic nanocellulose had a mass concentration of 4%.
(3) adding the obtained amphiphilic nanofiber dispersion to the obtained ceramic powder dispersion, and stirring and mixing homogeneously to obtain a mixed solution.
(4) adding a binder of polyacrylamide (purchased from Hunan Gaorui Power Materials Co., Ltd.) to the mixed solution and stirring homogeneously.
(5) adding a wetting agent (purchased from BYK) to the solution obtained by mixing homogeneously, stirring homogeneously, and replenishing the deionized water to obtain a finished coating slurry, where a mass ratio of the wetting agent to the dispersant was 1:1.
(6) coating the obtained finished coating slurry by using a concave plate roller, where a coating process adopts a manner commonly used in industry; and coating a ceramic fiber on one side of a base membrane. A PE film with a thickness of 7 µm was selected as the base membrane (purchased from SEMCORP). The ceramic fiber coating had a thickness of 1.5 µm.

**Table 3: Raw materials and parameters of the composite separator**

| | The raw material of the composite separator | | | | | | |
|---|---|---|---|---|---|---|---|
| | Amphiphilic nanofiber | | | | | Alumina | |
| | Density (g/cm³) | Thermal decomposition temperature (°C) | Diameter (nm) | Length (nm) | Length-to-diameter ratio | D50 (nm) | Density (g/cm³) |
| Example B1. | **1.56** | **280** | 4-20 | 100-500 | 5-50 | **200** | **3.5** |
| Example B2. | **1.56** | **280** | 4-20 | 100-500 | 50-125 | **200** | **3.5** |
| Example B3. | **1.56** | **280** | 4-20 | 100-500 | 50-125 | **200** | **3.5** |
| Example B4. | **1.56** | **280** | 4-20 | 100-500 | 50-125 | **200** | **3.5** |
| Example | **1.56** | **280** | 4-20 | 100- | 50-125 | **200** | **3.5** |
| B5. | | | | 500 | | | |
| Example B6. | **1.56** | **280** | 4-20 | 100-500 | 50-125 | **200** | **3.5** |
| Example B7. | **1.56** | **280** | 4-20 | 100-500 | 50-125 | **200** | **3.5** |
| Example B8. | **2.13** | **280** | 4-20 | 100-500 | 50-125 | **200** | **3.5** |
| Example B9. | **1.56** | **280** | 4-20 | 100-500 | 50-125 | **200** | **3** |
| Example B10. | **1.56** | **270** | 4-20 | 100-500 | 50-125 | **200** | **3.5** |
| Example B11. | **1.56** | **280** | 4-20 | 100-500 | 50-125 | **200** | **3.5** |
| Example B12. | **1.56** | **280** | 4-20 | 100-500 | 50-125 | **500** | **3.5** |
| Comparative Example B1 | Hydrophilic nanofiber. The remaining parameters were the same | | | | | **200** | |
| Comparative Example B2 | None | | | | | **200** | **3.5** |
| Comparative Example B3 | **1.56** | **280** | 4-20 | 100-500 | 5-50 | None | |
| Comparative Example B4 | Hydrophobic nanofiber. The remaining parameters were the same | | | | | **200** | **3.5** |

**Table 4: The raw materials and the parameters of the composite separator**

| | Coating slurry | Parameters of composite separator | | | | |
|---|---|---|---|---|---|---|
| | Mass percentage of solvent (%) | Fraction of ceramic | Fraction of Fiber | Fraction of binder | Mass ratio of fiber to ceramic | Thickness (µm) |
| Example B1. | 90 | 100 | 6 | 4 | 6:100 | 8.5 |
| Example B2. | 90 | 100 | 6 | 4 | 6:100 | 8.5 |
| Example B3. | 90 | 100 | 4 | 4 | 4:100 | 8.5 |
| Example B4. | 90 | 100 | 15 | 3 | 15:100 | 8.5 |
| Example B5. | 90 | 100 | 10 | 3 | 10:100 | 8.5 |
| Example B6. | 95 | 100 | 10 | 3 | 10:100 | 8.5 |
| Example B7. | 80 | 100 | 10 | 3 | 10:100 | 8.5 |
| Example B8. | 90 | 100 | 10 | 3 | 10:100 | 8.5 |
| Example B9. | 90 | 100 | 10 | 3 | 10:100 | 8.5 |
| Example B10. | 90 | 100 | 10 | 3 | 10:100 | 8.5 |
| Example B11. | 90 | 100 | 10 | 5 | 10:100 | 8.5 |
| Example B12. | 90 | 100 | 10 | 3 | 10:100 | 8.5 |
| Comparative Example B1 | 95 | 100 | 6 | 4 | 6:100 | 8.5 |
| Comparative Example B2 | 90 | 100 | None | 4 | None | 9 |
| Comparative Example B3 | 90 | None | 100 | 3 | None | 8.5 |
| Comparative Example B4 | 95 | 100 | 6 | 4 | 6:100 | 8.5 |

Parameters of the composite separator of Examples B1-B12 and Comparative Examples B1-B4 were tested by referring to the following methods.

### Thickness:

A thickness of the composite separator was measured by a Mahr Millimar thickness gauge. A test method was as follows: keeping the measured surface flat; measuring 5-10 points in a MD direction, where the 5-10 points were averaged to obtain the thickness of the composite separator.

### Surface density:

Three pieces of samples with the same area were cut from the composite separator. A thickness (H), area (S) and mass (m) of the sample were measured using a weighing method. A surface density of the sample was calculated in accordance with the provisions of GB/T 6343-2009: ρ=m/(H×S); ρ was averaged.

### SEM:

A separator sample with a length and a width in 0.5 cm * 0.5 cm was taken on the sample of the composite separator. A conductive adhesive was used to paste the sample on a sample table. The sample was placed in an ion sputtering instrument and sprayed with gold. The sample of the separator after being sprayed with gold was scanned and tested using a scanning electron microscope to shoot a morphology of the coating.

### Air permeability:

With an EG01 Oken-type air permeability meter, three sites were selected and average time t required to permeate through 100 ml of an air was measured and averaged.

### Moisture:

About 0.1 g of the three samples of the separator were weighed and sealed in a sample bottle. The sealed sample bottle was placed in a heating furnace, with a heating temperature of 150°C and time of 300 s. A Karl-Fischer Moisture Meter was used for a test. After the completion of the test, measured values of the three test samples were averaged.

### Peel strength:

The three samples with a width of 15 mm were cut in an MD direction of the test sample. The taken test sample was pasted on a slide using a double-sided adhesive. Then, the free end of the test sample was folded by over 180 °. An adhesive surface of 20mm was peeled off by hand. A tensile tester was used for a test. After the completion of the test, the measured values of the three test samples were averaged.

### Tensile strength:

The five test samples with a width of 15 mm and a length of 150 mm were cut on a product (100 mm of a test distance of the sample). CMT series of a microcomputer-controlled electronic universal (tensile) testing machine was used for measurement. After the completion of a test, the measured values of the five test samples were averaged.

### Needle strength:

A puncture needle had a diameter of ϕ1.65 mm and a needle tip SR = 0.5 mm. The three test samples were taken on the product. The specification of the taken test sample was not less than 5 cm × 5 cm. The sample was fixed in a sample table. Measurement was carried out using an electronic puncture strength test machine. After the completion of a test, the measured values of the three test samples were averaged.

### Separator-breaking temperature:

For a temperature-rise internal resistance method, a round separator sample with a diameter of ϕ50 mm was sealed in a mold containing a conductive liquid. The mold containing the sample was placed into an oven and heated at a rate of 5°C/min. A value of an internal resistance in the mold was changed with a change in a temperature in a process of heating and recorded.

A pore-closing temperature Tc: a starting temperature when the value of the internal resistance began to rise significantly. The separator-breaking temperature Tb: a temperature when the value of the internal resistance began to fall significantly.

### Liquid absorption rate and liquid retention rate:

Three samples of the separator with a length and a width of 100 mm × 100 mm were cut and weighed to be m0. The sample was placed in an electrolyte and taken out after being sealed and immersed for 1 h. The electrolyte on the surface of the sample was wiped clean with a dust-free cloth and weighed to be m1. The weighed sample was spread flat and left to stand in a room temperature environment for 1 h and weighed be m2. Liquid absorption rate = ((m1-m0))/m0×100%, liquid retention rate = ((m2-m0))/m0×100%. The measured values of the three test samples were averaged after the completion of a test.

### Infiltration:

2 µL of a PC solution was taken with a needle tube and dropped on the coated surface of the separator. Three points were taken. Wetting sizes in MD and TD were calculated when 0 min and 5 min were measured under an optical microscope.

### Contact angle:

With a contact angle measuring instrument DSA, 2 µL of water was taken and dropped on the coating surface of the separator with the needle tube. Three points were taken and subjected to standing for 5-15 s. Measured angles were averaged.

### Heat shrinkage:

The sample to be tested was cut into a size of 100 mm × 100 mm, marked with MD and TD directions, sandwiched between two layers of thick glass plates, put into the oven and baked at 150°C for 1 h, and taken out. Then, an optical projector was used to measure a length of the MD / TD direction after contraction. A calculation formula of a specific shrinkage rate was as follows:
Transverse shrinkage rate MD: ΔM=(M1-M2)/M1×100%;
Longitudinal shrinkage rate TD: ΔT=(T1-T2)/T1×100%;

In the above calculation equation, M1, T1: an initial length in mm; M2, T2: a final length in mm.

### Internal resistance:

Five separators matching a resistance test mold were taken, placed in lithium hexafluorophosphate (LiPF₆) with a concentration of 1 mol/L and ethylene carbonate (EC), and sealed and immersed. 1 layer of the soaked separator was placed to test an AC impedance resistance, and another layer was then placed to test an AC impedance thereof until 5 layers were placed. 5 AC resistances were tested respectively. The number of layers of the separators was taken as a horizontal coordinate, and the resistance of the separator was taken as a vertical coordinate to solve a slope and a linear fitting degree of a curve. The obtained slope was the impedance of the separator when the linear fitting degree was greater than 0.99. An apparatus adopted an independent design test apparatus of Solatron analytical 1400 CellTest System. Three measurements were carried out, and measured values were averaged.

**Table 5. Parameters and performance of the composite separator**

| | Surface density (g/m²) | Air permeability (s/100mL) | Moisture (ppm) | MD heat shrinkage (%, 150°C*1h) | TD heat shrinkage (%, 150°C*1h) | Internal resistance (Ω*cm²) | Peeling strength (N/m) |
|---|---|---|---|---|---|---|---|
| Example B1. | 6.8 | 197 | 845 | 2.7 | 2.6 | 1.4 | 131 |
| Example B2 | 6.8 | 199 | 856 | 2.5 | 1.9 | 1.3 | 132 |
| Example B3 | 7 | 180 | 812 | 2.6 | 2.3 | 1.4 | 125 |
| Example B4 | 6 | 191 | 977 | 2.7 | 2.3 | 1.4 | 140 |
| Example B5 | 6.6 | 186 | 897 | 1 | 0.8 | 1.3 | 135 |
| Example B6 | 6.2 | 180 | 882 | 1.9 | 1.5 | 122 | 151 |
| Example B7 | 6.1 | 175 | 875 | 3.0 | 2.1 | 115 | 146 |
| Example B8 | 7.3 | 212 | 956 | 1.1 | 1 | 132 | 171 |
| Example B9 | 7.2 | 220 | 962 | 1.2 | 0.9 | 129 | 169 |
| Example B10 | 6.6 | 185 | 899 | 1.5 | 1.4 | 136 | 159 |
| Example B11 | 6.5 | 219 | 945 | 1.9 | 1.7 | 140 | 151 |
| Embodiment B12 | 6.3 | 179 | 878 | 2.5 | 1.9 | 130 | 160 |
| Comparative Example B1 | 6.6 | 185 | 950 | 1.5 | 1.3 | 1.6 | 112 |
| Comparative Example B2 | 7.8 | 175 | 794 | 80 | 80 | 1.5 | 115 |
| Comparative Example B3 | 5.9 | 388 | 1400 | 4 | 4 | 2.1 | 138 |
| Comparative Example B4 | 6.6 | 186 | 892 | 5 | 4.5 | 1.4 | 75 |

**Table 6, Parameters and performance of the composite separator**

| | Separator-breaking temperature: (°C) | Needle strength (gf) | MD tensile strength (kgf/cm²) | TD tensile strength (kgf/cm²) | Contact angle (degree) | Infiltration value (mm) | Liquid absorption rate (%) | Liquid retention rate (%) |
|---|---|---|---|---|---|---|---|---|
| Example B1 | 150 | 465 | 2311 | 2239 | 14.5 | 4.1 | 220 | 122 |
| Example B2 | 161 | 479 | 2412 | 2303 | 12.5 | 4.3 | 232 | 137 |
| Example B3 | 154 | 471 | 2356 | 2298 | 13.9 | 4 | 190 | 115 |
| Example B4. | 152 | 467 | 2341 | 2279 | 10.4 | 4.5 | 285 | 166 |
| Example B5 | 168 | 496 | 2464 | 2352 | 11.3 | 4.2 | 255 | 154 |
| Example B6 | 459 | 2315 | 2263 | 12.5 | 4.0 | 236 | 132 | 122 |
| Example B7 | 451 | 2311 | 2248 | 11.6 | 3.9 | 221 | 125 | 115 |
| Example B8. | 495 | 2437 | 2329 | 11.5 | 4.2 | 228 | 122 | 132 |
| Example B9 | 195 | 2429 | 2331 | 11.7 | 4.0 | 219 | 121 | 129 |
| Example B10 | 495 | 2465 | 2350 | 11.2 | 4.2 | 254 | 155 | 136 |
| Example B11 | 482 | 2401 | 2285 | 12.1 | 3.8 | 235 | 130 | 140 |
| Example B12 | 471 | 2455 | 2337 | 11.8 | 4.0 | 233 | 134 | 130 |
| Comparative Example B1 | 165 | 482 | 2368 | 2323 | 15.1 | 3 | 178 | 109 |
| Comparative Example B2 | 135 | 437 | 2268 | 2123 | 17.1 | 2.6 | 155 | 66 |
| Comparative Example B3 | 175.6 | 498 | 2252 | 2214 | 8.6 | 5.9 | 406 | 195 |
| Comparative Example B4 | 166 | 495 | 2349 | 2311 | 35.1 | 1.5 | 152 | 78 |

FIG. 6 shows a scanning electron microscope image of the composite separator provided in Example B1. The coating of the composite separator included particles and fibers. The particles were distributed in a mesh-shaped structure of the fibers, indicating that a ceramic fiber layer structure was obtained.

As can be seen from Tables 3-6, when Examples B1-B5 were compared with Comparative Example B1, the hydrophilic nanocellulose had poor mechanical performance, poor thermal stability, poor infiltration, high moisture in the coating. The separator had weak puncture resistance, a low separator-breaking temperature, and a reduced infiltration value, due to the following reasons: a large amount of reactive and strong hydroxyls are provided on the surface of the hydrophilic nanocellulose. Therefore, the bonding of an internal hydrogen bond in materials was easy to break in a humid environment under the action of water molecules, thus destroying the overall network structure, and reducing the mechanical performance. The mechanical performance drops sharply. In addition, a water-based environment was unavoidable during the preparation and use of the raw material, which thus affects use performance, is not conducive to coating, and is also the main cause of separator curling and high moisture. The above showed that the addition of the amphiphilic nanofibers could not only improve an infiltration speed and degree of the electrolyte, the liquid absorption rate and the liquid retention rate, but also maintain the good mechanical performance of the material in a humid environment, which could enhance a puncture resistance of a fiber skeleton and solve coating curling, high moisture and other problems caused by the hydrophilicity of the raw material. In addition, Linking was provided between hydrophilic alumina and a hydrophobic base membrane. If the adhesion between the coating and the base membrane was improved, the amount of adhesive used could be reduced, which was conducive to reducing the internal resistance.

As can be seen from Tables 3-6, in Examples B1-B5 and Comparative Example B2, a conventional ceramic separator was compared. With the addition of the amphiphilic nanofibers, the surface density of the coating was lowered. The multi-layer superposition of the heat-resistant layers was achieved with a consistent thickness of the coating. The formed fiber skeleton prays a supportive role to enhance the heat resistance, the separator-breaking temperature, the puncture strength, the tensile strength, and electrolyte infiltration performance of the separator. Combined with the advantages of the nanofibers, i.e., high heat resistance and high thermal decomposition temperature, the coating and the fibers with a length-to-diameter ratio to form a porous interwoven network structure; the porous interwoven network structure had molecular polarity, strong interaction force between molecular chains, and the structural advantage of the fibers entangled with each other. Lightweight nanofibers reduced the surface density of the coating, so that the separator is highly heat resistant and lightweight.

As can be seen from Tables 3-6, Examples B1-B5 were compared with Comparative Example B3, indicating that although the nanofibers have excellent performance, it was not the case that the higher a fiber content, the better the performance of a coated membrane. Comparative Example B3 could meet the requirements for heat resistance. An amphiphilic characteristic also allowed the separator to have good infiltration, but the coating performance was not good. As the surface of the coating had only nanofibers, if the fibers with a small particle size and a small size had a too high density, the fibers were entangled and aggregated. The presence of hydroxyl on a surface had a self-forming membrane, resulting in phenomena of blocking pores and internal resistance abnormality, and affecting a basic physical performance of the separator. Therefore, the mixture of the fibers and ceramic particles was a good way of physical bonding, which reduced the proportion of the fibers in the coating slurry and facilitated the fibers to follow in a direction of expanding along a plane to avoid entanglement. The formation of an intertwined network structure was conducive to the filling of the ceramic particles, increasing pores and ensuring air permeability. The fibers can play advantages of the heat resistance, the puncture resistance and the tensile strength.

As can be seen from Tables 3-6, when Examples B1-B5 were compared with Comparative Example B4, the hydrophobic nanocellulose in the coating allowed the peeling strength between the coating and the base membrane to decrease. The separator had low liquid absorption rate and retention rate, and poor infiltration of the electrolyte, which was due to the following reasons: the surface of the hydrophobic nanofibers contained a large amount of hydrophobic groups; the adhesion between the nanofibers and the base membrane was low. In a thermal performance test (MD thermal shrinkage and TD heat shrinkage), the role of the coating against the shrinkage of the base membrane was not easy to achieve, leading to the poor heat shrinkage performance of the separator; in addition, the hydrophobic group would lead to poor effect of the infiltration of the electrolyte.

Comparison of Examples B1 and B2 indicated that by increasing a length-to-diameter ratio of the fibers within a certain range, the stronger the interaction of fiber winding was, the better the tensile performance of the composite coating was. There was physical entanglement between the nanofibers and between the nanofibers and a ceramic. The more closely arrangement, and the denser the fibers were as a main skeleton to form a porous mesh-shaped interwoven structure, the stronger the mechanical support was provided, the higher the puncture resistance, and the higher the separator-breaking temperature.

Comparison of Examples B3, B4 and B2 indicated that amphiphilic nanofibers are the key to improving the comprehensive performance of the separator. A proportion of the amphiphilic nanofibers was adjusted, which affected the heat resistance, the separator-breaking temperature, the puncture strength, the tensile strength and the infiltration of the separator. A mass ratio of the amphiphilic nanofibers to the ceramic powder was (6-10):100, which could allow the densification of the membrane surface to be good. Moreover, the separator had good tensile strength, good puncture resistance, high air permeability, reduced internal resistance, and good performance.

As can be seen from the comparison of Examples B5-B7, in the coating slurry, a water solvent had a mass content of about 90% (presumably 85%-92%), which could have good coating performance and highly dense coating. Further, the nanofibers were easy to spread in the plane, which was conducive to the filling of the ceramic powder, thereby improving the heat resistance of the separator, the separator-breaking temperature and the puncture strength.

As can be seen from the comparison of Examples B5, B8 and B9, if the density A1 of the amphiphilic nanofibers was less than 1/2 x the density A2 of the ceramic powder, the light advantage of the coating could be reflected. Under this ratio, the nanofibers could better present a network porous structure. The fibers were interwoven to create pores, which reduced air permeability time and internal resistance, was not easy to have the problem of blocking the pores, and could also improve the liquid absorption effect of the separator.

As can be seen from the comparison of Examples B5 and B10, the higher thermal decomposition temperature of the amphiphilic nanofibers was, the higher the heat resistance and the higher the separator-breaking temperature was.

As can be seen from the comparison of Examples B5 and B11, the addition of the binder was less and in a range of 1 wt%-3 wt% (2.7% in Example B5). The addition of the amphiphilic nanofibers increased the adhesion between the coating and the base membrane, which could reduce the addition amount of the binder to a certain extent, and also increased the addition amount of the ceramic and the amphiphilic nanofibers. Due to the rigidity and brittleness of a polymer binder, the nanofibers showed flexibility and toughness. An increase in a nanofiber content was conducive to improving the mechanical performance such as a tensile performance of the separator, and improving a liquid absorption performance of the composite separator. The entanglement and flocculation of the fibers caused by a material with high surface energy of the adhesive were reduced, which was conducive to the coating performance. A polymer adhesive was rigid and brittle. The fibers were flexible. The addition of the proportion of the fibers could enhance the mechanical performance such as tensile strength, reduce the internal resistance and the air permeability time, and improve the heat resistance and the liquid absorption performance.

Comparison of Examples B5 and B12 showed that the ceramic had lower D50 (within a length range of the amphiphilic nanofibers). With the same thickness, ceramic particles with a smaller particle size could achieve more layers of stacking. There were more support and protection layers on the base membrane. On the porous skeleton of nanofibers, the ceramic particles with small particle size were filled with a more comprehensive range, and had larger quantity and thickness, and the densely packed surface of the film. The composite separator had better comprehensive performance.

In summary, the length-to-diameter ratio of the amphiphilic nanofibers and the ratio of the nanofibers to the ceramic were adjusted, the highly heat-resistant lightweight coating separator could have the performance and structural advantages of the amphiphilic nanofibers, while combining with the advantages of heat resistance and air permeability of the ceramic. The above examples of the amphiphilic nanofibers had a length-to-diameter ratio of 50-125. A mass ratio of the amphiphilic nanofibers to alumina was (4-6):100. Considering the performance advantages of the materials and combining with the structural characteristics, the nanofibers with a high length-to-diameter ratio form a direction of expanding along a plane under the appropriate concentration of the slurry, and forms an intertwined network structure on the coating, thereby increasing sites bonded with the ceramic particles, conducive to the adsorption and filling of the ceramic particles. Strong support may well resist the puncture and stretching, improve the separator-breaking temperature at the same time, and achieve a good heat resistance of the fibers. The hydrophilic and lipophilic properties of the fibers may not only promote the infiltration of the electrolyte and improve the liquid absorption rate and the liquid retention rate, but also enhance an adhesion force between the coating and the polyolefin substrate, reduce the addition of the adhesive, which is conducive to reducing air permeability time of the separator, the internal resistance and the moisture.

The above contents involving common knowledge are not described in details, and can be understood by a person skilled in the art.

The forgoing are only some specific embodiments of the present application, and are not intended to limit the present application. Any modifications, equivalent replacements, improvements, and the like made within the spirit and principles of the present application shall be included in the scope of protection of the present application. The technical scope of the present application is not limited to the contents of the specification, but is determined in accordance with the scope of the claims.

## Claims

1. A composite separator, comprising: a base membrane, a first nanofiber layer, and a ceramic powder, wherein the first nanofiber layer is positioned on a first side of the base membrane, the ceramic powder forms a first ceramic coating positioned between the first nanofiber layer and the base membrane, or the ceramic powder is added to the first nanofiber layer.

2. The composite separator according to claim 1, wherein in a case where the ceramic powder forms the first ceramic coating positioned between the first nanofiber layer and the base membrane, the first nanofiber layer comprises nanofibers and a binder.

3. The composite separator according to claim 2, wherein in the case where the ceramic powder forms the first ceramic coating positioned between the first nanofiber layer and the base membrane, the nanofibers are stacked and connected to each other to form a two-dimensional network structure.

4. The composite separator according to claim 2, wherein in the case where the ceramic powder forms the first ceramic coating positioned between the first nanofiber layer and the base membrane, the nanofibers comprise: one or more of barium dititanate nanowires, hydroxyapatite nanowires, calcium phosphate nanowires, calcium silicate nanowires, and carboxymethyl cellulose nanowires; and/or, the binder comprises one or more of polymethacrylate, polyacrylamide, styrenate, phenylacrylate, polyvinylidene fluoride, and polyvinyl alcohol; and/or, the ceramic powder comprises one or more of inorganics of alumina, boehmite, barium titanate, silicon dioxide, and magnesium hydroxide.

5. The composite separator according to claim 1, wherein in the case where the ceramic powder forms the first ceramic coating positioned between the first nanofiber layer and the base membrane, the first nanofiber layer has a surface density of 0.1 g/m²-3 g/m²; and/or, the first ceramic coating has a surface density of 0.5 g/m²-3 g/m².

6. The composite separator according to claim 5, wherein in the case where the ceramic powder forms the first ceramic coating positioned between the first nanofiber layer and the base membrane, a ratio of a surface density of the first ceramic coating to a surface density of the first nanofiber layer is ≤ 6:1.

7. The composite separator according to claim 2, wherein in the case where the ceramic powder forms the first ceramic coating positioned between the first nanofiber layer and the base membrane, the nanofibers have a length-to-diameter ratio of 20-100; and/or, the nanofibers have a particle size D50 of 0.5 µm-6.5 µm; and/or, the nanofibers have a specific surface area of 2 m²/ g - 20 m²/g.

8. The composite separator according to claim 2, wherein in the case where the ceramic powder forms the first ceramic coating positioned between the first nanofiber layer and the base membrane, the ceramic powder has a particle size D50 of 0.3 µm-1 µm; and/or, the ceramic powder has a specific surface area of 2 m²/g-12 m²/g.

9. The composite separator according to claim 1, wherein in a case where the ceramic powder is added to the first nanofiber layer, the first nanofiber layer comprises: amphiphilic nanofibers and the ceramic powder.

10. The composite separator according to claim 9, wherein in the case where the ceramic powder is added to the first nanofiber layer, the amphiphilic nanofibers comprise one or more of amphiphilic nanocellulose, amphiphilic cellulose nanowhisker, amphiphilic cellulose nanofibril, and amphiphilic micro fibrillated cellulose, and/or the ceramic powder comprises one or more of alumina, titanium oxide, boehmite, silicon nitride, boron carbide, and barium sulfate.

11. The composite separator according to claim 9, wherein in the case where the ceramic powder is added to the first nanofiber layer, the amphiphilic nanofibers have a thermal decomposition temperature of ≥ 275°C; and/or, the amphiphilic nanofibers have a density of ≤ 1.6 g/cm³; and/or, the amphiphilic nanofibers have a diameter of 4 nm-20 nm; and/or, the amphiphilic nanofibers have a length of 100 nm-500 nm; and/or, the amphiphilic nanofibers have a length-to-diameter ratio of 5-125.

12. The composite separator according to claim 9, wherein in the case where the ceramic powder is added to the first nanofiber layer, the ceramic powder has a particle size D50 of 100 nm-1000 nm.

13. The composite separator according to claim 9, wherein in the case where the ceramic powder is added to the first nanofiber layer, a mass ratio of the amphiphilic nanofibers to the ceramic powder is (1-20): 100; and/or, a density of the amphiphilic nanofibers is denoted by A1, a density of the ceramic powder is denoted by A2, under a condition of units of A1 and A2 are the same, A1 < 1/2 x A2.

14. The composite separator according to claim 9, wherein in the case where the ceramic powder is added to the first nanofiber layer, the first nanofiber layer further comprises the binder.

15. The composite separator according to claim 14, wherein in the case where the ceramic powder is added to the first nanofiber layer, the binder comprises one or more of polyacrylamide, polybutyl methacrylate, poly-hydroxyethylmethacrylate, and polyvinyl alcohol.

16. The composite separator according to claim 14, wherein in the case where the ceramic powder is added to the first nanofiber layer, a total mass of the ceramic powder and the amphiphilic nanofibers accounts for 95 wt% to 99 wt% of a mass of the first nanofiber layer.

17. The composite separator according to claim 9, wherein in the case where the ceramic powder is added to the first nanofiber layer, hydrophilic groups of the amphiphilic nanofibers comprise one or more of hydroxyl, carboxyl, amino, quaternary amine, formyl, a sulfo group, and a phosphate group, while lipophilic groups of the amphiphilic nanofibers comprise one or more of alkyl, phenyl, and cycloalkyl.

18. A method for preparing the composite separator according to claim 1, comprising: (S1): coating a slurry containing nanofibers on a first side of the base membrane; and (S2): drying the slurry containing nanofibers to form the first nanofiber layer; wherein the method, prior to step (S1), further comprises (S01): coating a slurry containing the ceramic powder on the first side of the base membrane; and (S02): drying the slurry containing the ceramic powder on the first side of the base membrane; or, the method, prior to step (S1), further comprises (S0): adding the ceramic powder to the slurry.

19. The method according to claim 18, wherein in the case where the method, prior to step (S1), comprises (S01), the nanofibers have a length-to-diameter ratio of 20-100, the nanofibers have a particle size D50 of 0.5 µm-6.5 µm, the nanofibers have a specific surface area of 2 m²/g-20 m²/g; in a case where the method, prior to step (S1), further comprises step (S0), the nanofibers are amphiphilic nanofibers.

20. A battery, comprising: a separator, wherein the separator comprises the composite separator according to claim 1.
